# FASCICULE DE BREVET EUROPEEN

(11) **EP 2 377 587 B1**
(45) Date de publication et mention de la délivrance du brevet: **15.07.2020**
(21) Numéro de dépôt: 11163062.0
(22) Date de dépôt: 19.04.2011
(51) Int. Cl.: A63F 13/245, G06F 3/03

(54) **Contrôleur directionnel de jeu**
Richtungscontroller des Spiels
Directional game controller

(30) Priorité: 19.04.2010 FR 1052966; 12.05.2010 FR 1053757; 27.10.2010 FR 1058873
(43) Date de publication de la demande: 19.10.2011
(73) Titulaire: Guillemot Corporation, 35135 Chantepie (FR)
(72) Inventeur: Jaouen, Jean-Yves, 56350, SAINT JEAN DE LA POTERIE (FR)
(74) Mandataire: Vidon Brevets & Stratégie

(56) Documents cités:
- EP-A2- 1 332 778
- US-A- 6 020 875

## Description

### 1. Domaine de l'invention

Le domaine de l'invention est celui des matériels et accessoires de loisirs interactifs pour micro-ordinateurs et consoles de jeux. Plus précisément, l'invention concerne un contrôleur de jeu (pour programmes de divertissement, ou pour programmes de simulation, d'apprentissage de la conduite ou du pilotage de véhicules, ou pour jeux éducatifs pour adulte (en anglais « serious games »), etc.) comprenant un élément mobile en rotation par rapport à un support de direction porté par un socle. Il peut par exemple s'agir d'un volant, d'un guidon, ou de tout autre élément pouvant être utilisé dans un jeu de simulation, notamment pour contrôler les déplacements d'un véhicule. Certains programmes ou logiciels mettent en effet en œuvre un véhicule simulé qui évolue dans un environnement simulé. La reproduction du véhicule simulé peut être une reproduction fidèle d'un véhicule réel, mais elle peut également n'être qu'inspirée d'un véhicule réel, ou être sans lien avec la réalité.

### 2. Solution de l'art antérieur

Il est connu d'utiliser, pour contrôler les jeux vidéo, différents types d'interfaces, notamment sous la forme de volant ou guidon directionnel, en fonction des applications et des besoins, et généralement dans le but de se rapprocher le plus possible de la réalité. Ainsi pour un jeu vidéo simulant la conduite d'un véhicule, l'utilisation d'un actionneur correspondant dans sa forme et dans son utilisation au type de véhicule piloté rend la simulation plus réaliste, par exemple, l'utilisation d'un volant ayant la forme et les fonctions du volant d'une voiture grand tourisme pour un jeu de course de voitures grand tourisme. Le document US6020875 présente un système de transmission mécanique mis en œuvre dans une interface (volant, manette) à rétroaction permettant à un utilisateur de simuler la conduite d'un véhicule notamment. Le document divulgue la mise en œuvre d'un capteur 28 pour mesurer la rotation d'un volant.

De façon classique, les contrôleurs de jeu à colonne de direction comprennent au moins une partie préhensible (volant ou guidon, par exemple) montée pivotante autour d'un axe par rapport à un socle permettant à l'utilisateur de faire varier la trajectoire du véhicule simulé. La mesure de la rotation de la partie préhensible est généralement effectuée par un capteur potentiométrique sur lequel agit la partie mobile en rotation.

Les contrôleurs de direction pour jeux vidéo à capteurs potentiométriques présentent plusieurs inconvénients, notamment un manque de précision dans la mesure de l'angle et un jeu mécanique du potentiomètre lorsque la colonne de direction est à proximité de la position neutre (ce qui engendre une zone morte centrale). Ils sont également sujets à la poussière et à l'encrassement.

En outre, les capteurs potentiométriques ont une durée de vie parfois insuffisante. Du fait de l'usure des potentiomètres, le contrôleur de direction peut se décalibrer, voire cesser de fonctionner. Or, les contrôleurs de direction doivent supporter des efforts importants (l'utilisateur prend parfois appui sur eux), et la fragilité des capteurs potentiométriques nécessite de les protéger afin que les efforts ne s'appliquent pas directement sur eux (ce qui augmente le coût et altère le ressenti de l'utilisateur).

Enfin, dans le cas d'un contrôleur de direction pour jeux de voiture, l'utilisation d'un potentiomètre présente l'inconvénient de limiter le nombre de tour(s) que peut faire le volant ce qui est préjudiciable en particulier lorsque l'on souhaite simuler l'exécution de manœuvres (par exemple, faire faire un demi-tour à la voiture simulée).

Un autre inconvénient de la plupart des contrôleurs de jeu vidéo à colonne de direction est que la rotation du contrôleur de direction est trop molle, peu réaliste, et cela gène notamment l'utilisateur qui a besoin d'exercer des actions accessoires sur l'actionneur (par exemple, actionner une vitesse, le frein ou l'embrayage, tourner la tête du conducteur du véhicule simulé) sans changer de direction de façon involontaire.Un autre inconvénient de la plupart des contrôleurs de jeu à colonne de direction est qu'ils sont dédiés à la simulation d'un seul type de véhicule, et qu'il faut donc prévoir plusieurs contrôleurs distincts, si l'on souhaite utiliser plusieurs programmes (par exemple un simulateur de course automobile, un simulateur de course motocycliste et un simulateur de vélo freestyle). La partie préhensible du contrôleur de jeu ne convient au mieux qu'à un même type de véhicule simulé. Il n'est pas satisfaisant de contrôler par exemple, l'accélération d'une moto au moyen d'un bouton placé sur un volant. Et, contrôler la trajectoire d'une Formule 1 au moyen d'un guidon de moto n'a rien d'une simulation réaliste. Quant aux passionnés de simulation, seule une réplique quasi-exacte de la partie préhensible de leur véhicule réel favori leur conviendra.

Au delà de la partie préhensible qui n'est adaptée, au mieux, qu'à un type de véhicule simulé, le reste du contrôleur de direction n'est pas suffisamment robuste (tout particulièrement pour les simulations de moto cross) pour convenir à plusieurs types de véhicules simulés, donc à des interfaces de formes variées et dans le cas notamment d'un guidon, permettre à l'utilisateur de s'appuyer sur le contrôleur de jeu et d'utiliser ses deux mains (une main de chaque coté du guidon), ses doigts pour des actions spécifiques sur l'actionneur (par exemple, pour actionner les freins ou l'embrayage au guidon), et ses poignets (par exemple, pour tourner une molette d'accélération sur le guidon). En particulier, pour la plupart des contrôleurs de direction, le capteur potentiomètrique, la partie fixe et/ou la liaison entre la partie fixe et la partie préhensible du contrôleur ne sont pas suffisamment robustes.

### 3. Objectifs de l'invention

L'invention a notamment pour objectif de pallier ces inconvénients de l'art antérieur.

Plus précisément, l'invention a pour objectif de fournir un contrôleur de jeu à colonne de direction augmentant le réalisme du jeu, et donc la précision et l'adaptation à un jeu donné, notamment pour les simulations de conduite de véhicules.

Un autre objectif de l'invention est de fournir, selon au moins un mode de réalisation, un contrôleur de jeu à colonne de direction doté d'une grande longévité et d'une bonne résistance aux efforts exercés par l'utilisateur (ou joueur).

L'invention a également pour objectif, selon au moins un mode de réalisation, de rendre le contrôleur de jeu à colonne de direction plus facile à stocker et à transporter. Un autre objectif de l'invention selon cet aspect, est de fournir un contrôleur de jeu à colonne de direction qui soit simple (comportant peu de pièces) et facile à assembler. Un autre objectif de l'invention selon cet aspect, est de fournir un contrôleur de jeu à colonne de direction dont le service après-vente et le recyclage soient facilités.

Un autre objectif de l'invention est de fournir un tel contrôleur de jeu à colonne de direction, permettant de façon simple et efficace, selon au moins un mode de réalisation, d'utiliser des logiciels différents, mettant par exemple en œuvre des véhicules différents.

### 4. Exposé de l'invention

Ces objectifs, ainsi que d'autres qui apparaîtront par la suite, sont atteints à l'aide d'un contrôleur de jeu présentant un actionneur mobile en rotation par rapport à une partie fixe, de façon à simuler un contrôle de la rotation d'une colonne de direction d'un véhicule simulé.

En d'autres termes, il s'agit d'un contrôleur directionnel de jeu qui simule les organes de direction d'un véhicule simulé disposant d'une colonne de direction. Ce contrôleur de direction, capable de générer des signaux de sortie, comprend une partie fixe et un actionneur qui simule la partie préhensible de ces organes de direction et qui coopère avec une colonne de direction qui est mobile en rotation par rapport à la partie fixe. Il est à noter que la partie fixe peut être quant à elle mobile par rapport au sol ou au support sur lequel est fixé ou posé le contrôleur de jeu.

Selon l'invention, ledit contrôleur met en œuvre des moyens de détection du déplacement en rotation dudit actionneur comprenant au moins un ensemble de détection à effet Hall ou à effet magnétorésistif (y compris, mais non limitativement, l'effet magnétorésistif géant), constitué d'au moins deux éléments, dont un aimant permanent et un capteur magnétique, prévus de telle manière, que, au moins lors de la rotation dudit actionneur, un premier desdits éléments est solidaire en rotation dudit actionneur et un second desdits éléments est solidaire en rotation de ladite partie fixe.

Ainsi, la mesure de l'angle de rotation de l'actionneur par rapport à la partie fixe peut être effectuée de façon plus précise qu'avec des capteurs potentiométriques. L'absence de capteur potentiométrique confère une meilleure longévité et fiabilité au contrôleur de jeu. Les efforts exercés par l'utilisateur ne se transmettent pas à un capteur potentiométrique, mais à une colonne de direction du contrôleur, ou arbre, qui est dimensionnée pour supporter d'importants efforts. Le contrôleur offre donc un ressenti réaliste à l'utilisateur.

La mesure de l'angle de rotation de l'actionneur par rapport à la partie fixe peut ainsi être effectuée sans contact entre l'aimant et le capteur magnétique. Les champs magnétiques traversant nombres de matériaux, cette mesure peut être effectuée même si de la matière est placée entre l'aimant et le capteur magnétique. Le capteur magnétique peut ainsi, le cas échéant, être protégé par un carter de l'actionneur constitué, par exemple, de plastique.

L'absence de contact limite les risques d'usure et d'encrassement, et peut permettre, dans certains modes de réalisation, un démontage aisé de l'actionneur, et le cas échéant son interchangeabilité immédiate, si plusieurs actionneurs différents sont disponibles.

Dans certains modes de réalisation, elle permet également de fournir un contrôleur en au moins deux parties ou modules séparables. Le module 'actionneur' peut être vendu séparément du module 'partie fixe'. Cela facilite le stockage : les modules étant séparables, ils peuvent être séparés et agencés ensemble dans une boîte d'un plus petit volume que lorsque le contrôleur est constitué d'éléments non séparables. Cela permet de réaliser des économies d'échelle sur la fabrication d'un module 'partie fixe' commun à plusieurs contrôleurs. Cela facilite de plus le transport et le stockage, puisque les modules peuvent être transportés ou rangés indépendamment. Cela facilite enfin le service après-vente puisque si un module est défaillant, il n'est pas nécessaire de retourner l'intégralité du contrôleur au vendeur ou au fabricant.

Il est également possible dans certains modes de réalisation de fournir un contrôleur en au moins deux modules (ou sous-ensembles) séparables dont un module ne comprenant aucun élément électrique. Fournir les éléments électriques tous regroupés dans au moins un module et fournir dans au moins un autre module les éléments non électriques (par exemple le module comprenant la colonne de direction et le socle) facilite également le service après-vente car les pannes électriques pouvant être facilement distinguées des pannes mécaniques, le service après vente (retour, échange, etc.) peut donc s'appliquer uniquement au module défaillant. Cela facilite également le recyclage du contrôleur car le ou les modules non électriques peuvent être recyclés et valorisés dans des unités de recyclage distinctes.

Même dans le cas où l'actionneur n'est que démontable de la partie fixe, par exemple par un opérateur d'une unité de recyclage (par exemple, en dévissant une ou plusieurs vis), il reste souhaitable, pour les raisons précédemment indiquées, de fournir un contrôleur constitué d'au moins deux parties ou sous-ensembles démontables l'un de l'autre, dont au moins un sous-ensemble ne comprenant aucun élément électrique.

Selon un mode de réalisation particulier de l'invention, les éléments constitutifs de l'ensemble de détection à effet Hall sont alignés selon l'axe de rotation dudit actionneur.

Ceci permet de limiter la dispersion pour récupérer la performance maximale de l'aimant. On peut utiliser un aimant moins gros et/ou moins « fort ». Cela permet d'utiliser un seul capteur et un seul aimant et cela facilite la mise au point du produit (qui se révèle importante car l'actionneur est détachable) et son démontage.

Dans un mode de réalisation particulier, le contrôleur met en œuvre deux ensembles de détection distincts, à savoir un premier capteur situé dans l'actionneur coopérant avec un aimant placé à proximité de la colonne de direction, et un deuxième capteur placé en vis-à-vis du moteur dynamisant la colonne de direction en rotation (et le cas échéant en translation).

Selon un mode de réalisation particulier, l'aimant de l'ensemble de détection à effet Hall est solidaire de la partie fixe.

Ledit aimant peut être solidaire de la partie fixe par l'intermédiaire d'un premier arbre fixe par rapport à la partie fixe du contrôleur, ce premier arbre fixe s'étendant selon l'axe de rotation de l'actionneur et portant cet aimant.

Cela réduit la distance entre le capteur et le ou les aimants ce qui s'avère important car la densité du flux magnétique décroit avec la distance.

Notamment, ce premier arbre peut être une tige porte aimant cylindrique et l'aimant peut être un aimant couronne monté à l'extrémité de la tige.

Selon un mode de réalisation particulier de l'invention, un second arbre mobile en rotation par rapport à la partie fixe du contrôleur selon l'axe de rotation de l'actionneur, peut assurer le guidage dudit aimant couronne par rapport audit capteur magnétique.

Ceci améliore la robustesse du produit (ce qui n'est pas anodin car le contrôleur de jeu peut être utilisé pour des simulations de motocross freestyle et de moto-cross. L'actionneur (guidon dans ce cas) et la colonne de direction subiront donc d'important efforts qui seront supérieurs à ceux qui s'exercent par exemple lors de simulation de course automobile).

On peut ainsi notamment prévoir que le premier arbre fixe et/ou l'aimant sont conformés de façon que l'aimant soit placé à moins de 9 mm du capteur magnétique.

Selon un autre mode de réalisation particulier de l'invention, les moyens de déplacement en rotation de l'actionneur comprennent un moteur électrique rotatif agissant sur l'actionneur par l'intermédiaire de moyens de transmission appartenant au groupe comprenant les engrenages, les poulies, les roues dentées, les courroies et les chaînes.

Dans ce mode de réalisation, le contrôleur de jeu est non seulement capable de générer des signaux de sortie, mais également de recevoir des signaux d'entrée qui correspondent, par exemple, à des commandes (exécution d'un effet de couple, d'un effet de vibrations, etc.) ou à des données (données provenant par exemple, d'un pédalier et ou d'une boîte de vitesses séparée du volant) ou encore à un mode de fonctionnement particulier du contrôleur (calibrage, démonstration, économie d'énergie, etc.).

Le contrôleur met en œuvre des moyens de détection du déplacement en rotation de l'actionneur comprenant au moins un ensemble de détection à effet Hall ou à effet magnétorésistif (y compris, mais non limitativement, l'effet magnétorésistif géant).

Notamment, l'aimant est solidaire de l'arbre de rotation du moteur électrique rotatif, le capteur magnétique étant situé à proximité de l'aimant sensiblement dans le prolongement de l'arbre du moteur électrique rotatif. Par conséquent, ledit capteur et ledit aimant sont sensiblement alignés selon l'axe de rotation dudit moteur.

La mesure de l'angle de rotation de l'actionneur par rapport à la partie fixe peut ainsi être effectuée sans contact entre l'aimant et le capteur magnétique.

Cette mise en œuvre offre une précision bien supérieure à ce qui existe dans le domaine des jeux vidéo. De plus, elle ne limite pas le nombre de tours que peut effectuer la colonne de direction.

Selon un mode de réalisation particulier, le contrôleur de jeu comprend des moyens de déplacement en translation de l'actionneur par rapport à la partie fixe sur une plage de déplacement prédéterminée.

Ainsi, l'actionneur est monté mobile en translation par rapport audit bâti qui est fixe (en ce sens qu'il constitue un référentiel du contrôleur de jeu), sur une plage de déplacement prédéterminée. Le contrôle du déplacement en translation de l'actionneur peut être assurée par un moteur électrique linéaire constitué, par exemple, d'un assemblage d'au moins deux pièces de coulissement coulissant l'une par rapport à l'autre ou les unes par rapport aux autres, une des pièces de coulissement étant solidaire de l'actionneur et une autre des pièces de coulissement étant solidaire du bâti fixe, une première des pièces de coulissement comprenant au moins une fente dans laquelle peut se déplacer au moins une portion pénétrante de la seconde des pièces de coulissement. Le déplacement en translation est généré par des moyens électromagnétiques selon un signal électrique dont les caractéristiques varient en fonction d'une commande reçue (ladite commande peut être, par exemple, une consigne de déplacement de type rampe ou sinus, ou une consigne de type maintien en position neutre), une première des pièces de coulissement étant solidaire d'au moins un bobinage parcouru par le signal électrique et une seconde des pièces de coulissement étant solidaire d'au moins un aimant.

Ainsi, la colonne de direction est dynamisée :
- en translation par un système de retour de force et/ou de vibration(s) au moyen, par exemple, d'un dispositif électromagnétique agissant sur la colonne de direction par l'intermédiaire d'un assemblage de deux pièces de coulissement, dont un socle mobile en translation sur lequel est monté en rotation la colonne, le déplacement en translation du socle étant contrôlé par des moyens électromagnétiques ; et, dans au moins un mode de réalisation,
- en rotation par un système d'effets de couple et de vibration(s) au moyen, par exemple, d'un moteur électrique rotatif agissant sur la colonne de direction par l'intermédiaire d'un système d'engrenages et/ou de courroies crantées.

Comme souligné auparavant, le contrôle du déplacement en rotation de l'actionneur peut être assuré par un moteur électrique rotatif. Le déplacement en rotation est généré par ce moteur électrique rotatif selon un signal électrique dont les caractéristiques varient en fonction d'une commande reçue (ladite commande peut être, par exemple, une consigne de déplacement de type rampe ou sinus, ou une consigne de type maintien en position neutre). Des moyens de traitement, sous la forme d'un microprocesseur contrôlent ledit signal électrique et commandent ainsi le sens, l'amplitude (par exemple, l'angle de rotation du moteur électrique rotatif) et la vitesse dudit déplacement.

De nombreux effets de retour de force (« force feedback » en anglais) sont possibles, par exemple : inertie, ressort, blocage, accélération, mouvement brusque (choc), etc.

Différents effets de vibration(s) sont également possibles, ils peuvent notamment différer en fonction de leurs amplitudes, durées, et périodes.

Le programmeur du logiciel de jeu choisit le ou les effets de retour de force à appliquer en fonction du scénario du jeu (par exemple : le scénario prévoit une portion de route verglacée, un cours d'eau à traverser, etc) et des actions de l'utilisateur sur le jeu (par exemple, l'utilisateur n'a pas ralenti ou pas suffisamment). Le jeu requiert l'exécution du ou des effets de retour de force et/ou des effets de vibration(s) choisis par le programmeur pour un tel cas de figure parmi une librairie d'effets de retour de force et de vibrations.

Un tel contrôleur de jeu peut ainsi convertir des paramètres mécaniques provenant du logiciel en forces appliquées à la colonne de direction, et donc au volant, selon deux axes.

Ainsi, en plus du système classique d'effets de couple et de vibration(s) appliqué sur la rotation de la colonne (et donc du volant ou du guidon), on met en œuvre simultanément au moins un retour de force appliqué sur la translation de la colonne par des moyens électromagnétiques de façon à simuler, notamment, des effets d'accélération ou de décélération et un effet de suspension.

En d'autres termes, le contrôleur de l'invention actionne la colonne de direction en rotation et en translation offrant ainsi un ressenti réaliste à l'utilisateur.

Selon un mode de réalisation particulier de l'invention, l'actionneur peut être détachable de la partie fixe du contrôleur de jeu.

Ledit actionneur peut comprendre un logement formant partie femelle, prévu pour s'emboîter sur une partie mâle correspondante sur la partie fixe.

Selon un mode de réalisation particulier, le contrôleur de jeu prévoit des moyens de verrouillage de l'actionneur sur la partie fixe.

Selon un aspect particulier, l'actionneur comporte un connecteur sur lequel peut venir se connecter un câble.

Selon un mode de réalisation particulier, l'actionneur appartient au groupe comprenant :
- Les volants;
- Les guidons;
- Les barres à roue de bateau.

Dans un mode de réalisation particulier, on peut prévoir que le contrôleur de jeu comprend ou est compatible avec au moins deux actionneurs interchangeables.

On peut notamment prévoir que les lesdits actionneurs interchangeables présentent des caractéristiques procurant une ergonomie différente à l'utilisateur.

Cette différence d'ergonomie peut notamment provenir d'actionneurs pouvant avoir des formes différentes, des diamètres différents, des commandes différentes (par exemple, des boutons différents, une molette d'accélération et pas de palette de commande, etc.), être filaire ou sans fil, etc.

Selon un aspect particulier de l'invention lesdits actionneurs interchangeables peuvent présenter des capteurs magnétiques ou des aimants différents, de façon à obtenir des effets restitués différents, une résolution différente (des mesures de déplacement plus ou moins précises), et/ou une résistance plus ou moins grande aux perturbations magnétiques ou aux variations de température, etc.

Selon un mode de réalisation particulier de l'invention, le contrôleur est constitué d'au moins deux parties (par exemple, une partie fixe et une partie mobile 'actionneur'), dont l'une au moins (de préférence, la partie fixe) ne contient aucun élément fonctionnant grâce à des courants électriques ou à des champs électromagnétiques.

En particulier, le contrôleur de jeu peut être constitué de plusieurs modules assemblés par l'utilisateur, lesdits modules étant eux-mêmes constitués d'éléments fournis pré-assemblés à l'utilisateur, au moins un desdits modules ne contenant aucun élément qui met en œuvre des courants électriques ou des champs électromagnétiques ni aucun élément qui contrôle ou achemine des courants électriques.

Dans un mode de réalisation particulier de l'invention, une portion de l'actionneur lui servant de carter peut protéger le capteur magnétique.

L'invention concerne également l'actionneur mobile en rotation par rapport à une partie fixe, de façon à simuler un contrôle de la rotation d'une colonne de direction, destiné à un contrôleur de jeu.

De même, l'invention concerne aussi la partie fixe destinée à former, avec un actionneur mobile en rotation par rapport à cette partie fixe, un contrôleur de jeu.

Au lieu d'un capteur magnétique comptant le nombre de tours d'un ou plusieurs aimants (en captant un nombre d'inversions de pôle magnétique), il s'agit ici de préférence d'un autre type de capteur magnétique, multiaxial (par exemple, 2D ou 3D) qui va capter les caractéristiques du champ magnétique d'un ou plusieurs aimants (en mesurant la rotation du champ magnétique c'est-à-dire les densités de flux) selon deux directions au moins. Un algorithme permet de calculer des valeurs angulaires à partir des mesures et de déterminer le signe -le sens de rotation- (et ensuite de calculer une vitesse et une accélération ou décélération). Cette approche offre une précision qui est bien supérieure à la précision obtenue dans le domaine du jeu vidéo de l'art antérieur.

Dans une alternative, le moteur électrique rotatif n'agit pas sur l'actionneur par l'intermédiaire de moyens de transmission (engrenages, poulies, roues dentées, courroies et chaînes). Par conséquent, le moteur électrique rotatif (pour les effets de couple) est en liaison directe avec la colonne de direction (le moteur électrique rotatif peut faire partie de cette colonne de direction) et il agit sur l'actionneur (par le biais de la colonne de direction et, selon le cas, via une pièce de liaison qui rend l'actionneur détachable de la partie fixe).

Dans une autre alternative, le moteur électrique rotatif (pour les effets de couple) et le moteur électrique linéaire (pour les effets de retour de force) peuvent être placés dans l'actionneur, ce qui permet, d'obtenir des effets de couple et de retour de force tout en ayant une partie fixe qui ne contient aucun élément qui met en œuvre des courants électriques ou des champs électromagnétiques, ni aucun élément qui achemine des courants électriques.

### 5. Liste des figures

D'autres caractéristiques et avantages de l'invention apparaîtront plus clairement à la lecture de la description suivante de deux modes de réalisation préférentiels, donnés à titre de simples exemples illustratifs et non limitatifs, et des dessins annexés, parmi lesquels :
- la figure 1 est une vue en perspective du contrôleur de jeu selon un premier mode de réalisation préférentiel de l'invention, et plus précisément d'un exemple de contrôleur de direction à volant pour le contrôle notamment de jeux vidéo ;
- la figure 2 est une vue en perspective du contrôleur de jeu de la figure 1, l'actionneur détachable étant séparé de la partie fixe ;
- la figure 3 est une vue en perspective de l'actionneur du contrôleur de jeu de la figure 1 ;
- la figure 4 est une vue en perspective de la partie fixe du contrôleur de jeu de la figure 1;
- la figure 5 est une vue en perspective de l'intérieur de la partie fixe de la figure 1 ;
- la figure 6 est une vue en coupe du contrôleur de la figure 1 ;
- la figure 7 est une vue en perspective de l'actionneur et d'une partie des pièces constituant la partie fixe du contrôleur de jeu selon un deuxième mode de réalisation préférentiel de l'invention ;
- la figure 8 est une autre vue en perspective de l'actionneur et d'un ensemble de pièces situées à l'intérieur de la partie fixe du contrôleur de la figure 7 ;
- la figure 9 est une vue en perspective de l'actionneur du contrôleur de la figure 7 ;
- les figures 10A et 10B sont respectivement des vues de dessous et de face du système de fixation du contrôleur de la figure 7 ;
- la figure 10C est une vue en perspective de la partie fixe du contrôleur de la figure 7 ;
- la figure 11 est une autre vue en perspective de pièces situées à l'intérieur de la partie fixe du contrôleur de la figure 7;
- la figure 12 est une vue de côté de l'intérieur de la partie fixe du contrôleur de la figure 7;
- la figure 13 est une vue de détail des moyens de retour de force en translation de l'actionneur du contrôleur de la figure 7.

### 6. Description détaillée de l'invention

### 6.1 principe général et variantes

Les actionneurs des contrôleurs directionnels de jeu sont généralement des guidons ou des volants dont l'angle de rotation par rapport au socle est mesuré par l'intermédiaire d'un potentiomètre. D'autres types d'actionneurs peuvent bien sûr être envisagés, par exemple pour simuler le contrôle d'un bateau, d'un vaisseau spatial, ...

L'invention propose d'utiliser un ensemble de détection à capteur magnétique et aimant permanent pour mesurer le déplacement en rotation, et le cas échéant en translation, de l'actionneur par rapport à la partie fixe du contrôleur de jeu, de façon à s'affranchir de tout contact entre les moyens de mesure, et d'obtenir une bonne précision. On notera qu'un tel ensemble de détection peut non seulement mesurer l'angle de rotation de l'actionneur, mais également la vitesse et le sens de rotation de l'actionneur. Par la suite, on décrit des systèmes basés sur l'effet Hall. Les mêmes approches peuvent cependant être mises en œuvre avec des systèmes basés sur l'effet magnétorésistif notamment, mais non limitativement, l'effet magnétorésistif géant.

De nombreuses mises en œuvre de l'invention sont envisageables. Quelques exemples sont proposés ci-après.

### 6.1.1 Variante 1

Dans un premier mode de réalisation préférentiel, le capteur magnétique peut être monté mobile par rapport à la partie fixe, plus précisément il peut être solidaire de l'actionneur (y compris d'une pièce solidaire de l'actionneur) lorsque l'actionneur pivote autour de l'axe A. Par exemple, le capteur magnétique peut être placé sur un PCB fixé dans l'actionneur. L'aimant peut quant à lui être monté solidaire de la partie fixe lorsque l'actionneur pivote autour de l'axe A. Par exemple, l'aimant peut être monté sur une pièce fixée à la partie fixe, cette pièce peut être un arbre (un arbre n'est pas nécessairement cylindrique ou tubulaire) s'étendant selon l'axe A.

### 6.1.2 Variante 1 bis

Dans un autre exemple, ce capteur magnétique (ici mobile) peut également être monté dans la partie fixe, plus précisément il peut être solidaire d'une pièce de liaison montée en pivot sur la partie fixe, ladite pièce de liaison étant destinée à coopérer avec une cavité complémentaire de l'actionneur et un aimant permanent étant solidaire de la partie fixe du contrôleur. Dans ce mode de réalisation, le capteur magnétique n'est pas dans l'actionneur (c'est-à-dire qu'il n'est pas dans la partie préhensible du contrôleur) mais dans la partie fixe. Lorsque l' actionneur est assemblé -de façon amovible ou non- à la pièce de liaison, le capteur magnétique qui est fixé à la pièce de liaison devient solidaire en rotation de l'actionneur. L'angle de rotation de l'actionneur est identique à l'angle de rotation de la pièce de liaison et le capteur magnétique interagit avec l'aimant permanent qui est quant à lui fixe par rapport à l'actionneur.

### 6.1.3 Variante 1 ter

Dans un autre exemple, l'aimant peut être placé dans une pièce mobile en rotation par rapport à la partie fixe (par exemple, dans l' actionneur ou dans une pièce de liaison, mais mobile en rotation par rapport à l'actionneur en montant l'aimant sur un roulement à rouleaux) et le verrouillage de l'actionneur à la partie fixe en même temps bloque l'aimant qui ne peut plus tourner par rapport à la partie fixe tout en permettant la rotation de l'actionneur par rapport à la partie fixe. Le capteur magnétique est quant à lui solidaire en rotation de l'actionneur (par exemple, il est dans l'actionneur ou dans une pièce solidaire de l'actionneur lorsque l'actionneur pivote par rapport à la partie fixe).

### 6.1.4 Variante 2

Dans un second mode de réalisation, le capteur magnétique peut être monté fixe par rapport à la partie fixe, plus précisément il peut être solidaire de la partie fixe (y compris d'une pièce fixe par rapport à la partie fixe même lorsque l'actionneur pivote autour de l'axe A) lorsque l'actionneur pivote autour de l'axe A. Par exemple, le capteur magnétique peut être fixé dans la partie fixe. L'aimant peut quant à lui être monté solidaire de l'actionneur lorsque l'actionneur pivote autour de l'axe A. Par exemple, l'aimant peut être fixé à l'actionneur ou monté sur une pièce fixée - de façon permanente ou non - à l'actionneur.

Dans un autre exemple, l'aimant solidaire en rotation de l'actionneur, donc mobile par rapport à la partie fixe est porté par un arbre mobile (y compris une tige) qui est solidaire de l'actionneur (y compris d'une pièce de liaison mobile en rotation autour de l'axe A par rapport à la partie fixe) et qui porte cet aimant auprès du capteur magnétique. Le capteur magnétique est alors fixé à la partie fixe.

### 6.2 description détaillée d'un premier mode de réalisation préférentiel

Dans le premier mode de réalisation préférentiel décrit par la suite, l'actionneur est un volant (type volant de voiture de grand tourisme) détachable de la partie fixe. On place un aimant permanent sur la partie fixe du contrôleur et un capteur magnétique bi-axial (2D) rotatif à effet Hall dans le volant. L'utilisation d'un ensemble de détection à effet Hall, comprenant au moins deux éléments, dont un aimant permanent et un capteur magnétique, permet d'éviter le passage d'un câble électrique entre l'actionneur et la partie fixe (dans le cas d'un actionneur non séparable de la partie fixe) ou d'éviter un connecteur électrique entre l'actionneur et la pièce de liaison (la présence d'un connecteur au niveau de la liaison entre l'actionneur et la partie fixe présente notamment l'inconvénient d'engendrer une faiblesse car le connecteur est sollicité à chaque dépose, repose de l'actionneur détachable).

Dans d'autres modes de réalisation, l'aimant et le capteur peuvent être inversés. Par ailleurs, bien que l'utilisation d'un unique aimant et d'un unique capteur soit avantageuse, notamment dans une position où ils sont alignés avec la colonne de direction, il est envisageable d'utiliser plusieurs aimants et/ou capteurs distribués de façon adéquate.

En outre, dans d'autres modes de réalisation, il peut être envisagé que le capteur magnétique à effet Hall soit un capteur magnétique 3D à effet Hall.

Cependant, suivant le type de capteur magnétique utilisé un bon alignement peut être très important.

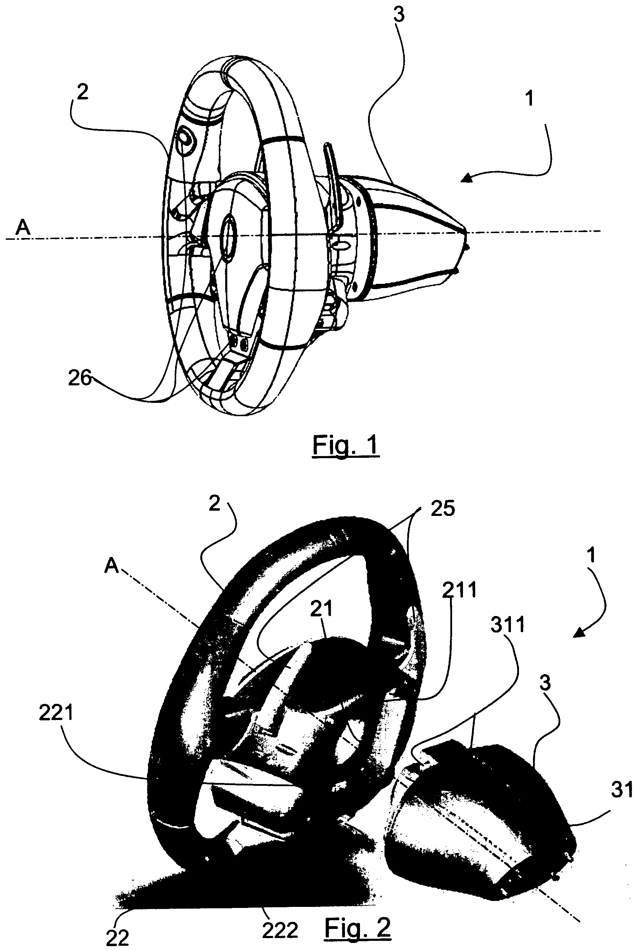

La figure 1 est donc une vue en perspective d'un exemple de contrôleur de jeu selon l'invention. Ce contrôleur 1 comprend un actionneur 2, sous la forme d'un volant mobile en rotation par rapport à une partie fixe 3 selon un axe A de rotation.

On distingue notamment sur cette figure des boutons 26 et des palettes 25 de commande disposés sur l'actionneur.

Selon le mode de réalisation de l'exemple, la figure 2 illustre par une vue en perspective l'actionneur 2, une fois séparé de la partie fixe 3.

Pour assembler l'actionneur 2 avec la partie fixe 3, une pièce de liaison 31, montée en pivot sur la partie fixe 3, est destinée à coopérer avec une cavité complémentaire 21 de l'actionneur 2. Les formes de la cavité 21 et de la pièce de liaison 31 sont ajustées et permettent (lorsque ces deux parties coopèrent) la transmission du mouvement de rotation de l'actionneur 2 vers la pièce de liaison 31.

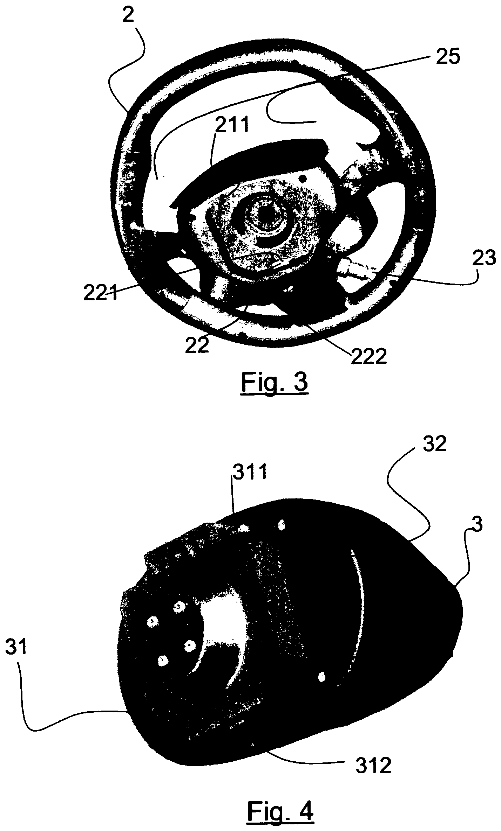

Le contrôleur comporte un système de fixation qui permet de fixer et de verrouiller de façon réversible l'actionneur 2 sur une pièce de liaison 31. Le système de fixation comporte, dans ce mode de réalisation, un axe 311 disposé sur la pièce de liaison 31. Cet axe 311 est destiné à venir se placer dans un logement 211 situé dans la cavité 21. Le système de fixation comporte aussi un loquet de verrouillage 22 disposé sur l'actionneur 2. Ce loquet est formé d'une partie supérieure 221 qui est prévue pour venir se placer dans une cavité 312 (visible sur la figure 4) sur la pièce de liaison 31, et d'une partie inférieure 222 permettant à l'utilisateur de venir actionner ce loquet 22 lorsqu'il souhaite désolidariser l'actionneur 2 de la partie fixe 3.

De nombreux autres moyens de fixation réversibles ou non peuvent bien sûr être mis en œuvre, sans sortir du champ de l'invention, y compris un simple emboîtement à force du volant sur la colonne de direction 33, dans un mode de réalisation simplifié.

La figure 3 est une vue en perspective de l'actionneur 2 vue de dessous. Cette figure laisse notamment apparaître un connecteur 23 sur lequel peut venir se connecter un câble, pour l'alimentation en énergie électrique et/ou la transmission de données (par exemple, des informations sur la rotation de l'actionneur 2, et le cas échéant des informations complémentaires, tels qu'une commande de changement de vitesse, lorsque l'utilisateur agit sur les palettes 25, ou encore d'autres commandes déclenchées par l'activation des boutons 26 (visibles sur la figure 1) situés sur l'actionneur 2).

Dans un autre mode de réalisation, la transmission des données peut être effectuée sans fil, par un émetteur à radio fréquence (par exemple, 2,4 GHz) placé dans l'actionneur 2 ; l'alimentation en énergie électrique étant alors assurée par une ou plusieurs piles ou accumulateurs placée(s) dans un boîtier aménagé dans l'actionneur 2 ou dans un boîtier détachable et connectable à l'actionneur 2.

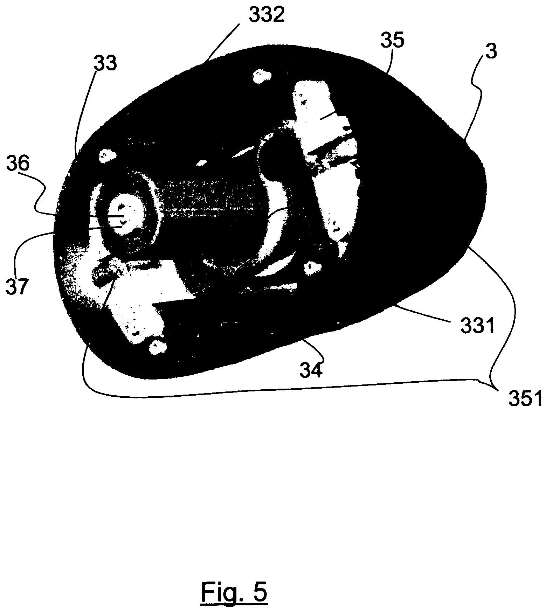

La figure 4 est une vue en perspective de la partie fixe 3. On distingue notamment, à l'extrémité avant de la partie fixe 3, la pièce de liaison 31 permettant de faire l'interface entre l'actionneur 2 et la partie fixe 3. Cette pièce de liaison 31 est mobile en rotation par rapport au socle 32, selon l'axe A et permet de transmettre à la colonne de direction du contrôleur 1, qui dans ce mode de réalisation est l'arbre 33 (visible sur la figure 5), le mouvement de rotation exercé par l'utilisateur sur l'actionneur 2 et à un système de dynamisation et/ou de retour du volant en position neutre (ou système de retour au centre), détaillés ci-dessous.

La figure 5 est une vue en perspective de l'intérieur de la partie fixe 3 montrant notamment le système de retour au centre (par élastique dans ce mode de réalisation).

Dans ce mode de réalisation, l'arbre 33 est conçu de telle sorte qu'il constitue à la fois l'axe principal de rotation du contrôleur 1 (qui peut donc être qualifié de colonne de direction du contrôleur 1), et qu'il constitue également une partie du système de retour au centre de l'actionneur 2. L'arbre 33 est formé d'une seule pièce mais il pourrait être formé de plusieurs pièces fixées les unes aux autres (par exemple, un arbre et une pièce de retour sur laquelle s'exercent les forces de retour au centre). L'arbre 33 (ou colonne de direction 33) est monté pivotant autour de l'axe A par rapport au support du mécanisme de rotation 35, ce dernier étant fixé à la partie fixe 3. Le socle 32 et le support du mécanisme de rotation 35 assurent le guidage en rotation de la colonne de direction 33. La colonne de direction 33 est solidaire en rotation de la pièce de liaison 31, et donc de l'actionneur 2, et se déplace donc en rotation de la même façon que l'actionneur.

Un arbre 36 fixe est fixé au support du mécanisme de rotation 35 (il est, par exemple, emboîté à force dans le support du mécanisme de rotation) et s'étend le long de l'axe A pour approcher l'aimant au plus près du capteur magnétique. L'aimant est dans ce mode de réalisation un aimant couronne 37. La colonne de direction 33 comporte un espace intérieur tubulaire dans lequel pénètrent l'arbre 36 fixe et l'aimant couronne 37.

La section circulaire de l'espace intérieur à la colonne de direction 33 est par conséquent complémentaire de la section circulaire de l'aimant couronne 37. La colonne de direction 33 guide donc l'aimant couronne 37 et recentre cet aimant par rapport à l'axe A. Cela équilibre la mécanique et permet une amélioration de la précision de la mesure de la rotation (en évitant un balourd, un déséquilibre de l'aimant, une flexion de l'arbre 36). La mesure demeure précise même en cas de flexion de la colonne de direction 33.

Dans une variante, l'aimant couronne est placé sur un arbre 36 fixe, et la forme de cet aimant complète le guidage en rotation de l'actionneur 2 autour de l'axe A, en guidant la rotation de la colonne de direction 33.

Dans une autre variante, l'arbre 36 fixe assure le guidage en rotation de la colonne de direction 33 et donc de l'actionneur 2 autour de l'axe A. Une forme en couronne de l'aimant ne procure alors plus d'avantage et la forme de l'aimant peut donc être différente (par exemple, un aimant droit peut être fixé à l'extrémité d'un logement aménagé à l'extrémité de l'arbre 36).

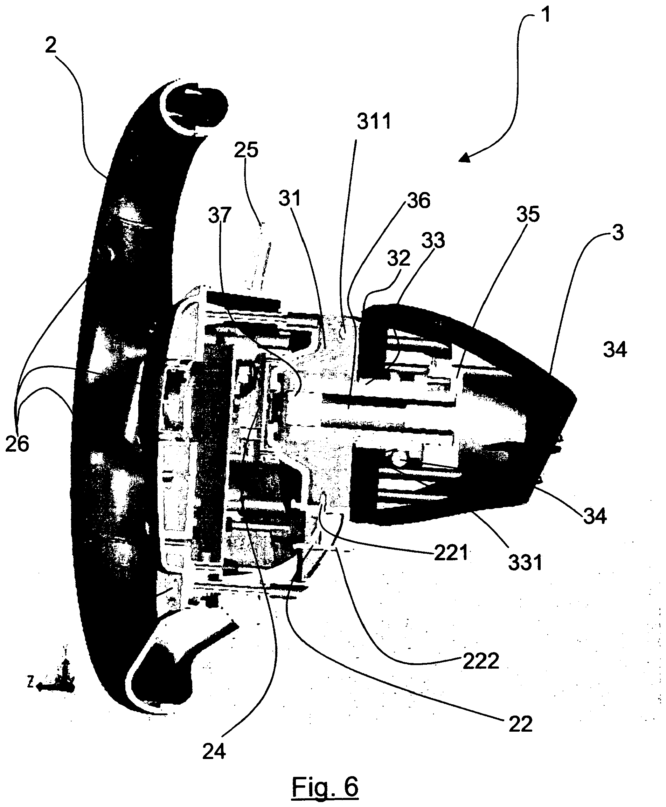

Dans le mode de réalisation représenté sur les figures 5 et 6, la colonne de direction 33 est mobile en rotation par rapport à la partie fixe et au socle 32, et l'arbre 36 est fixe par rapport à la partie fixe 3. Cette approche peut être inversée. L'arbre 33 peut être fixe par rapport à la partie fixe 3 et au socle 32. L'arbre 36 est alors mobile en rotation par rapport à la partie fixe 3. L'arbre 33 assure le guidage en rotation. La pièce de liaison coopérerait avec l'extrémité de l'arbre 36 et l'actionneur 2 (et assure une liaison non définitive entre eux). La rotation de l'actionneur provoque la rotation de l'arbre 36. L'aimant peut être fixe par rapport à la partie fixe 3. Par exemple, un aimant couronne pourrait être emboîté à force dans l'arbre 33. L'arbre 36 est mobile en rotation dans l'aimant couronne (l'aimant couronne contribuerait alors en partie au guidage en rotation). Le PCB portant le capteur magnétique 24 est alors mobile par rapport à la partie fixe 3.

En variante à cette approche inversée, l'aimant couronne pourrait être emmanché à force autour de l'arbre 33 au lieu d'être emboîté à force dans l'arbre 33 (l'arbre 33 étant fixe car nous sommes dans l'approche inversée).

En seconde variante à cette approche inversée, au lieu d'être un aimant couronne emboîté à force dans l'arbre 33, l'aimant peut être un aimant droit d'une longueur inférieure au diamètre d'un arbre 36 cylindrique qui pourrait être emboîté à force -sans dépasser radialement- dans une fente aménagée dans l'extrémité d'un tel arbre 36 (dans ce cas l'arbre 33 n'est plus nécessaire, le guidage en rotation pouvant alors être assuré directement par le socle 32 de la partie fixe 3, et le diamètre de l'arbre 36 peut être plus grand).

Dans le premier mode de réalisation préférentiel représenté sur les figures 5 et 6, la colonne de direction 33 comporte une première poulie, ou une portion de poulie, 331, centrée sur l'axe A, et deux courts arbres sensiblement parallèles à l'axe A et qui portent chacun une petite poulie de renvoi 332 (une seule étant visible sur la figure 5, l'autre étant montée de façon symétrique). Ces poulies 331 et 332 guident une corde élastique 34 dont les extrémités sont ancrées au support du mécanisme de rotation 35 fixé à la partie fixe 3, au niveau des deux rainures 351.

L'axe de chacune des poulies 332 est solidaire de la colonne de direction 33. Les poulies 332 peuvent de préférence tourner autour leur axe. Les extrémités de la corde élastique 34 ne sont pas fixées au support du mécanisme de rotation 35, elles sont simplement ancrées, maintenues solidaires du support du mécanisme de rotation 35 par la précontrainte de la corde élastique. En effet, chaque extrémité de la corde élastique 34 est attachée à une bobine (une pièce en forme de bobine de fil, c'est-à-dire une sorte de poulie sans axe de rotation).

Cette bobine vient se coincer contre le support du mécanisme de rotation 35 (la hauteur de la bobine ne lui permet pas de franchir la rainure 351) mais sous réserve d'avoir au préalable ôté la partie fixe 3 (ou avant d'avoir vissé la pièce de liaison 31 à la colonne de direction 33, le socle 32 à la partie fixe 3 et le support du mécanisme de rotation 35 à la partie fixe 3), il est possible de tirer radialement sur la bobine (en s'opposant à la force élastique) pour dégager la bobine du support du mécanisme de rotation 35 en étirant l'élastique au-delà de la rainure 351. Cela permet d'ôter la corde élastique 34 du système de retour au centre, puis d'ôter la colonne de direction 33 du support du mécanisme de rotation 35.

La corde élastique 34 exerce, lorsque l'actionneur 2 est déplacé, une force de rappel tendant à ramener les poulies 332 et donc la colonne de direction 33 et l'actionneur 2, dans une position neutre (correspondant, dans le cas où une voiture est simulée, à une position des roues alignées avec le véhicule simulé). Les frottements de la corde élastique 34 permettent de simuler une résistance dans la direction. La corde élastique 34 exerce notamment une force de résultante sensiblement verticale sur la poulie 331, qui soutient la colonne de direction ce qui améliore la qualité perçue par l'utilisateur.

Dans un autre mode de réalisation, le système de retour au neutre du volant peut utiliser deux ressorts de traction ayant des caractéristiques identiques agissant de part et d'autre de la colonne de direction au lieu d'une corde élastique et de poulies. En position neutre de l'actionneur, les deux ressorts de traction sont légèrement précontraints. Lorsque l'actionneur 2 est déplacé, chacun des deux ressorts exerce une force de rappel qui tend à ramener la colonne de direction et l'actionneur en position neutre.

Dans encore un autre mode de réalisation, le système de retour au neutre (ou retour au centre) du volant est encore plus simple : un ressort de torsion dont le diamètre interne des spires est légèrement supérieur au diamètre extérieur de la colonne de direction est placé autour de la colonne de direction. Ce ressort de torsion coopère avec un ergot aménagé sur la face interne de la pièce 32 du socle. Ce ressort ne comporte que peu de spires et, en position finale, les branches de ce ressort sont à trois cent soixante degrés (c'est-à-dire sensiblement parallèles). En position neutre de l'actionneur, le ressort est légèrement précontraint et les deux branches de ce ressort de torsion appuient contre l'ergot. Lorsque l'actionneur 2 est déplacé, l'une des branches du ressort s'éloigne de l'ergot et une force de rappel tend à ramener cette branche contre l'ergot et donc la colonne de direction et l'actionneur en position neutre.

Dans un mode de réalisation particulier, la rotation de la colonne de direction 33 est dynamisée par un système de force feedback au moyen, par exemple, d'un moteur électrique rotatif agissant sur la colonne de direction par l'intermédiaire d'un système d'engrenages et/ou de courroie crantée. Dans ce cas, un engrenage de grand diamètre (pour la précision) est fixé de façon coaxiale à la colonne de direction 33. Cet engrenage reçoit mécaniquement (via un train d'engrenages et ou de roues et courroies crantées) les forces exercées par le moteur électrique qui est actionné en fonction des effets de retour de force (« force feedback » en anglais) implémentés par un programme (par exemple, un jeu vidéo). L'engrenage, et donc la colonne de direction 33 et l'actionneur 2, pivote ou stoppe sa rotation autour de l'axe A sous l'action du moteur électrique, par exemple, il peut ramener l'actionneur 2 en position neutre, ou s'opposer à la rotation de la colonne de direction 33, provoquer la rotation de la colonne de direction 33, provoquer des à-coups dans la rotation de la colonne de direction 33, etc.

La figure 5 laisse apparaître clairement l'aimant couronne 37. Comme indiqué ci-avant, la forme de l'aimant couronne 37 permet de le guider par rapport à la colonne de direction 33, c'est-à-dire de le maintenir coaxial avec l'axe A. Il est placé au sommet de l'arbre 36, et peut donc se trouver à proximité immédiate (par exemple moins de 9 mm) du capteur magnétique 24 à effet Hall placé dans l'actionneur 2. L'arbre 36 constitue ainsi dans ce mode de réalisation une tige porte aimant. De manière générale, plus l'aimant est fort, plus la distance entre le capteur magnétique et l'aimant peut être grande. Dans ce mode de réalisation, cette distance est de 8. 05 mm.

Selon une variante de ce premier mode de réalisation de l'invention, le capteur magnétique 24 (et le cas échéant un ou d'autres capteurs associés par exemple, à un système de dynamisation de la colonne de direction en translation) fournit en temps réel les données qui permettent à un microprocesseur (qui peut être placé sur un PCB situé soit dans l'actionneur 2, soit dans la partie fixe 3) de contrôler en temps réel le déplacement en rotation de la colonne de direction 33, en déterminant en temps réel le ou les déplacements réels (l'angle réel peut être mesuré directement mais il est également possible de déterminer le sens, l'accélération et la vitesse réelle du déplacement).

Il est ainsi possible de tenir compte des conséquences provoquées par les efforts exercés par l'utilisateur sur l'actionneur 2 (et donc sur la colonne de direction 33) et d'ajuster si nécessaire le signal électrique.

Par exemple, si l'effet de retour de force est une immobilité (c'est-à-dire une absence de mouvement de rotation de l'actionneur et de la colonne de direction), l'utilisateur est susceptible de lutter contre cette immobilité. Dès lors, sans asservissement, la colonne de direction 33 est susceptible de se déplacer sous l'action des efforts exercés par l'utilisateur malgré le signal électrique utilisé. Dans cet exemple, si le capteur 24 mesure un changement de position alors que le microprocesseur exécute une consigne « immobilité », alors le microprocesseur peut ajuster en temps réel le signal électrique pour contrer les efforts de l'utilisateur (par exemple, en augmentant la tension électrique).

Le contrôle du déplacement en rotation comprend donc ici la commande de l'amplitude du déplacement (y compris une course de déplacement nulle), de son sens, de l'accélération et de la vitesse de déplacement, par un signal électrique dont les caractéristiques permettent théoriquement d'obtenir ces paramètres de déplacement, la vérification de l'exécution réelle de ces paramètres et l'ajustement du déplacement si nécessaire. Dans cette variante du premier mode de réalisation particulier, le déplacement est donc asservi.

En d'autres termes, il y a deux façons de mettre en œuvre ce premier mode de réalisation particulier de l'invention :
- la première, sans asservissement, dans laquelle on contrôle le déplacement en boucle ouverte, sans connaître le déplacement réel donc sans tenir compte si l'utilisateur exerce ou non des efforts qui affectent le déplacement (par exemple, la position ou la vitesse) ; et
- la seconde, avec asservissement, dans laquelle on mesure le déplacement réel en temps réel pour ajuster si nécessaire le signal électrique (y compris, par exemple, la tension).

Dans d'autres modes de réalisation, l'aimant couronne 37 peut être placé à un autre emplacement fixe par rapport à la partie fixe 3. Par exemple, il peut être monté sur le socle 32 et placé autour de l'embouchure du socle 32, c'est-à-dire de l'ouverture aménagée dans ce socle pour que la colonne de direction 33 puisse déboucher à travers le socle 32. Dans ce cas, l'arbre 36 ne serait plus nécessaire et le diamètre extérieur de la colonne de direction 33 pourrait être réduit. Et, il est possible de prolonger l'embouchure du socle 32 dans la direction de l'axe A pour qu'elle forme un tube plus long que le court palier tubulaire représenté sur la figure 6, de sorte que l'aimant couronne soit situé à l'extrémité de ce tube et à l'intérieur de la pièce de liaison et soit au plus près du capteur magnétique.

Dans le premier mode de réalisation préférentiel illustré par les figures 4 et 5, la partie fixe 3 ne comporte aucun élément fonctionnant grâce à des courants électriques ou à des champs électromagnétiques. En effet, cette partie fixe ne comporte aucun élément fonctionnant grâce à des courants électriques ou à des champs électromagnétiques (il n'y a notamment ni moteur électrique, ni composant électronique). Par ailleurs, dans le mode de réalisation illustré par les figures 4 et 5, la partie fixe 3 ne comporte aucun élément contrôlant ou acheminant des courants électriques (il n'y a notamment ni connecteur électrique, ni câble électrique, ni interrupteur électrique).

La figure 6 est une vue en coupe du contrôleur. Elle permet de voir l'intérieur de l'actionneur 2 et l'intérieur de la partie fixe 3. Le capteur magnétique 24 à effet Hall, solidarisé à l'intérieur de l'actionneur 2, est situé à proximité immédiate de la cavité 21 dans laquelle vient se loger la pièce de liaison 31 de la partie fixe 3. De cette manière, le capteur magnétique 24 est situé très proche de l'aimant couronne 37, qui exerce un champ magnétique traversant la pièce de liaison 31. On peut ainsi effectuer une mesure de grande précision.

Plus précisément, lorsque l'utilisateur déplace l'actionneur 2 en rotation, il entraîne simultanément en rotation le capteur magnétique 24 par rapport à l'aimant couronne 37, qui reste fixe puisque ce dernier est solidaire du support du mécanisme de rotation 35 et donc de la partie fixe 3. Par conséquent, le capteur magnétique 24 mesure selon deux directions au moins une variation du champ magnétique due au déplacement rotatif du capteur par rapport à l'aimant, qui peut alors être transformée en un angle de rotation précis, sens de rotation et vitesse de rotation, et transmis au système de traitement de données exécutant le jeu. Ce mouvement de rotation de l'actionneur 2 est en même temps appliqué à la pièce de liaison 31, et à la colonne de direction 33 y compris à la portion ou pièce de retour portant les deux courts arbres et les poulies 332. Celle-ci agit alors, via la corde élastique 34, ancré au support du mécanisme de rotation 35 (donc à la partie fixe 3), pour générer une force de rappel élastique permettant le retour au centre de l'actionneur 2, en position neutre, dès que l'utilisateur cesse d'exercer un couple dessus.

Il est possible de prévoir une butée solidaire de l'arbre 33 mobile et qui coopère avec la partie fixe (ou le support du mécanisme de rotation 35) pour limiter la rotation de l'arbre 33 de façon à prévenir une rupture de la corde élastique 34 ou empêcher que la corde élastique génère un couple de rappel dangereux pour l'utilisateur.

Cependant, il est aussi possible de prévoir, dans un mode de réalisation particulier, que l'actionneur puisse faire un grand nombre de tours, voire de ne pas être limité en nombre de tours. Cela est notamment permis par l'absence de contacts entre l'actionneur 2 et la partie fixe 3. Cela présente un intérêt notamment lorsque l'on souhaite simuler l'exécution de manœuvres (par exemple, faire faire un demi-tour à la voiture simulée).

### 6.3 description détaillée d'un deuxième mode de réalisation préférentiel

Dans le deuxième mode de réalisation préférentiel décrit ci-après, le contrôleur de jeu met en oeuvre deux systèmes de retour de force procurant chacun des effets variés (sensations d'inertie, de blocage, d'amortissement, de choc, de vibration, ...).

Plus précisément, la rotation et la translation de la colonne de direction du volant sont dynamisées par des moteurs électriques rotatif et linéaire respectivement.

Ainsi, la rotation de la colonne de direction est dynamisée par un système d'effet de couple et de vibration(s) qui permet de créer des effets de couple et/ou des effets de vibration(s) autour de l'axe de rotation du contrôleur de jeu.

En outre, on prévoit un nouvel axe de retour de force sur le contrôleur de jeu par au moins une translation de la colonne de direction offrant ainsi de nouveaux effets de retour de force et des simulations plus réalistes. Il est possible de prévoir notamment une translation de la colonne de direction s'effectuant sur une course courte.

Cette translation est effectuée suivant l'axe de la colonne ou suivant un axe proche par le biais d'un assemblage de deux pièces de coulissement coulissant l'une par rapport à l'autre et d'un dispositif électromagnétique simulant ainsi notamment des effets de suspension, d'accélération et/ou de décélération, par exemple selon la technique décrite dans la demande de brevet FR 1053757, incorporée par référence.

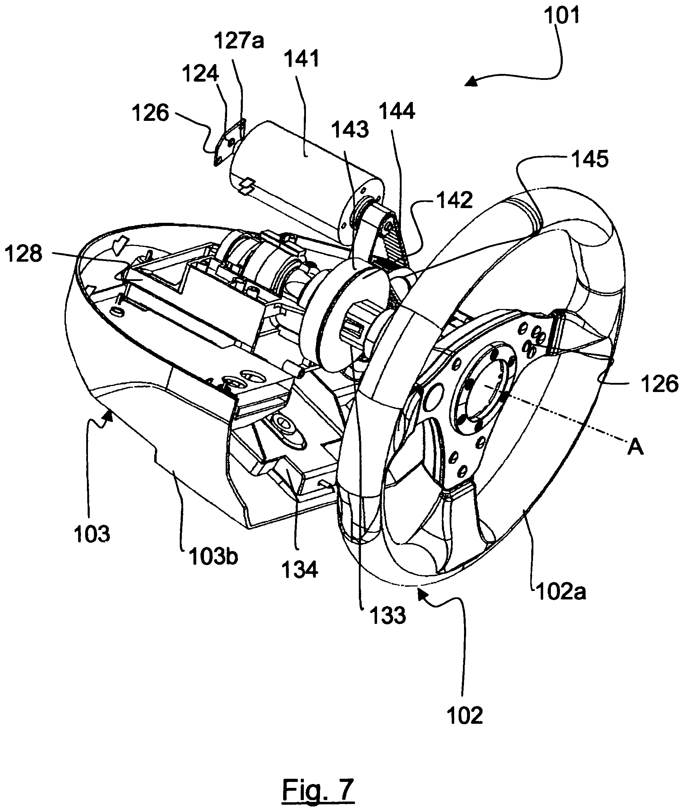

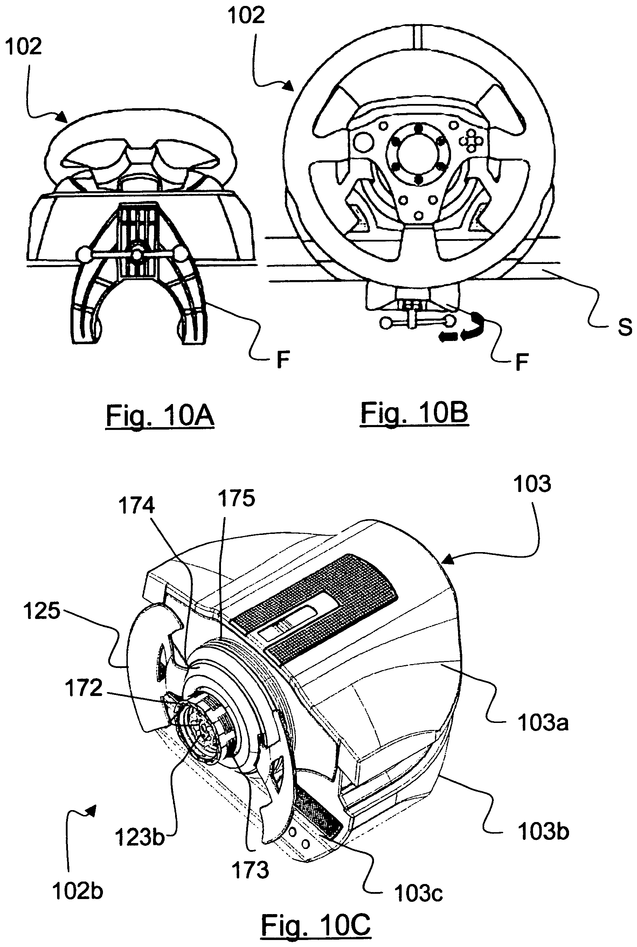

La figure 7 est une vue en perspective d'un deuxième exemple de contrôleur de jeu selon l'invention. Ce contrôleur 101 comprend un actionneur 102, sous la forme d'un volant (type volant de voiture de grand tourisme par exemple) mobile en rotation par rapport à une partie fixe ou bâti 103 selon un axe A de rotation, et détachable de cette partie fixe 103. La partie fixe 103 peut être montée sur un support S fixe par le biais d'un système de fixation F connu, comme représenté sur les figures 10A et 10B. La partie fixe 103 comprend, comme illustré sur la figure 10C, une coque supérieure 103a assemblée de manière amovible à une coque inférieure 103b et à une face avant 103c.

La coque inférieure 103b de la partie fixe 103 assure la liaison ou la solidarisation, réversible ou non, du contrôleur 101 avec un support tel qu'une table, un plan de travail ou un cockpit. Le contrôleur de jeu 101 peut être associé à des pédales et, dans le cas où le passage des vitesses ne s'effectue pas au volant, à une boîte de vitesses séparée du volant.

La figure 7 illustre, par une vue en perspective, l'intérieur du contrôleur 101 une fois la coque supérieure 103a et la face avant 103c retirées notamment.

On distingue sur cette figure une platine 134 reliée de manière fixe à la partie fixe 103, l'arbre 133 (qui constitue la colonne de direction du contrôleur 101) auquel est relié l'actionneur 102. L'arbre 133 (ou colonne de direction 133) est solidaire de l'actionneur 102, et se déplace donc en rotation autour de l'axe A de la même façon que l'actionneur 102.

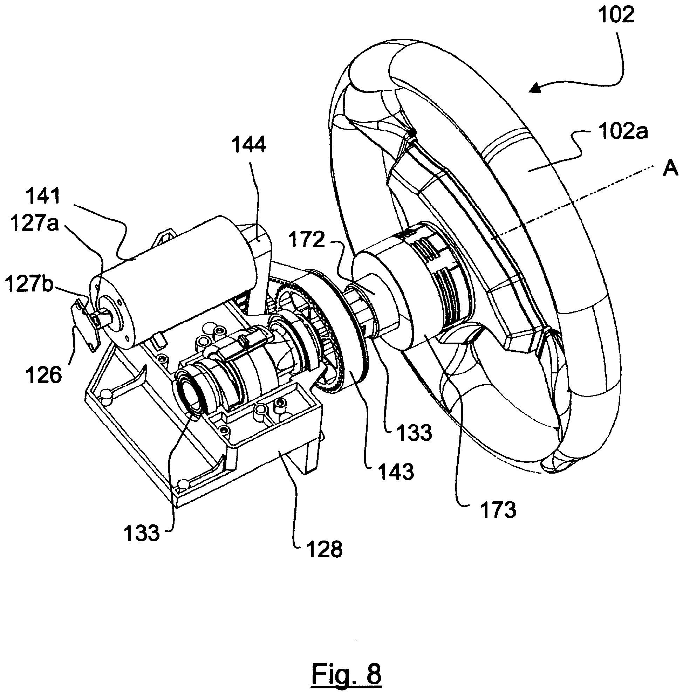

La figure 8 illustre, par une vue en perspective, l'intérieur du contrôleur 101 une fois la coque supérieure 103a, la face avant 103c et la coque inférieure 103b retirées notamment.

La rotation de la colonne de direction 133 est dynamisée par un premier système, dit système d'effet de couple et, le cas échéant, de vibration(s), au moyen, par exemple, d'un moteur électrique 141 rotatif dont l'axe de rotation est de préférence sensiblement parallèle à celui de la colonne de direction 133. Le moteur électrique 141 rotatif agit sur la colonne de direction 133 par l'intermédiaire d'un système de poulies ou de roues dentées et de courroies ou chaînes. Dans le mode de réalisation illustré, on utilise une courroie crantée et des roues dentées.

Dans ce cas, une roue dentée 142 de grand diamètre (pour la précision) est fixée de façon coaxiale à la colonne de direction 133. Cette roue dentée 142 reçoit mécaniquement (via un train de roues dentées et une courroie crantée) les forces exercées par le moteur électrique 141 qui est actionné en fonction des effets de couple ou des effets de vibration(s) implémentés par le jeu.

Ainsi, sur cette roue dentée 142 est montée une courroie crantée 143 reliée à une petite roue dentée de la roue intermédaire 145. Cette roue intermédiaire 145 comporte en effet une petite roue dentée (non représentée car la roue intermédiaire n'est qu'en partie représentée) et une grande roue dentée qui sont coaxiales (la roue intermédaire 145 forme une seule pièce mais elle pourrait être formée de deux pièces fixées l'une à l'autre. La grande roue dentée de la roue intermédiaire 145 entraîne une courroie crantée 144. Cette courroie crantée 144 est reliée à l'arbre du moteur électrique rotatif 141 (qui dynamise en rotation l'arbre 133 de l'actionneur 102).

La roue dentée 142, et donc la colonne de direction 133 et l'actionneur 102, pivote ou stoppe sa rotation autour de l'axe A sous l'action du moteur électrique 141. Par exemple, il peut ramener l'actionneur 102 en position neutre, ou s'opposer à la rotation de la colonne de direction 133, provoquer la rotation de la colonne de direction 133, provoquer des à-coups dans la rotation de la colonne de direction 133, etc.

Inversement, la colonne de direction 133 de l'actionneur (volant dans le cas illustré) 102 étant reliée au moteur électrique rotatif 141 par un système de roue(s) dentée(s) et de courroie(s), un mouvement de l'actionneur 102 est transmis à la colonne de direction 133 du volant et à l'arbre (ou axe) du moteur électrique rotatif 141.

Ainsi, le système de roues et courroies crantées transmet le mouvement de rotation de l'arbre du volant à l'arbre du moteur électrique rotatif (et réciproquement). En ce sens, ces arbres sont solidaires en rotation.

Un tel système d'effet de couple utilisant un moteur électrique rotatif permet un retour au centre (ici un retour de l'actionneur 102 en position angulaire neutre) qui ne limite pas le nombre de tours que peut faire l'actionneur 102, contrairement à ce que permet un système de retour au centre par élastique ou ressort(s).

Un porte-aimant 127a (c'est-à-dire un support d'aimant 127a) est monté solidaire de l'axe ou de l'arbre du moteur électrique rotatif 141. Ce porte-aimant 127a, et donc l'aimant 127b, est mobile en rotation autour de l'axe de rotation du moteur électrique rotatif 141.

Un capteur magnétique (ici un capteur bi-axial à effet Hall) 124 monté sur un PCB 126 est placé à proximité du porte-aimant 127a sensiblement dans le prolongement de l'axe du moteur électrique rotatif 141.

En d'autres termes, le capteur magnétique 124 est placé non pas en regard de l'arbre 133 de l'actionneur 102 comme dans le premier mode de réalisation mais en regard de l'arbre du moteur électrique rotatif 141.

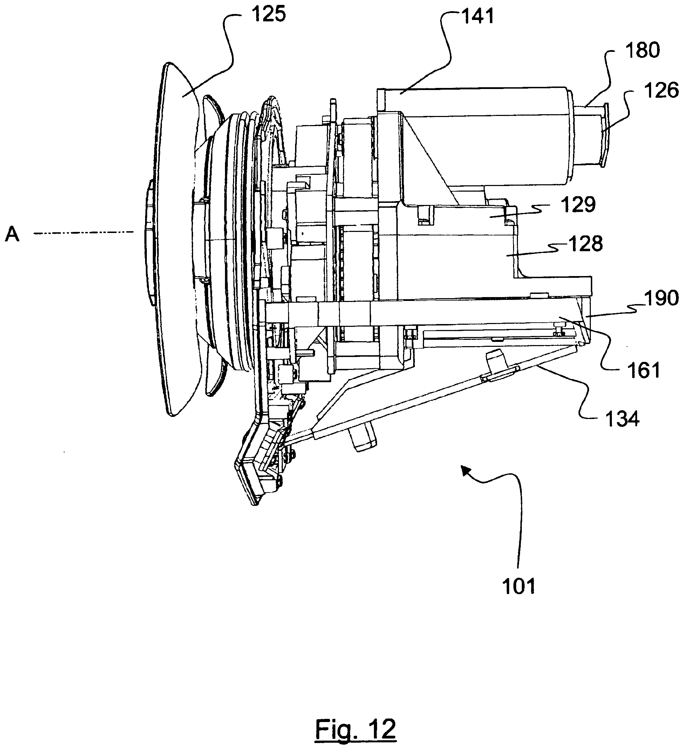

On notera que le support du PCB 126 du capteur magnétique n'est pas représenté sur les figures 7 et 8, mais est visible sur la figure 12 (référencé 180). Ce support 180 du PCB 126 et le capteur magnétique 124 sont solidaires de la partie fixe du moteur, c'est-à-dire du boîtier ou enveloppe du moteur électrique qui est fixé par des vis à la demi-coque supérieure 129 du moteur électrique rotatif 141. Le support 180 du PCB 126 et le capteur magnétique 124 ne sont pas solidaires de la partie fixe 103 du contrôleur 101.

Comme on le verra par la suite, le moteur électrique rotatif 141 est entraîné en translation, avec la demi-coque inférieure 128 et avec la demi-coque supérieure (qui n'est pas représentée), par le moteur électrique linéaire par rapport à la partie fixe 103 du contrôleur 101. Par ailleurs, l'arbre 133 de l'actionneur 102 est mobile en rotation par rapport à la demi-coque inférieure 128 qui est elle mobile en translation, mais pas en rotation, par rapport à la partie fixe 103 du contrôleur 101.

La colonne de direction 133, et donc le volant 102, est dynamisée en translation par un deuxième système, dit système de retour de force.

Pour ce faire, le contrôleur 102 du contrôleur de jeu 101 est monté mobile en translation par rapport à la partie fixe 103 suivant son axe de rotation A ou suivant un axe proche (et donc distinct) de cet axe A, sur une plage de déplacement prédéterminée, à l'aide d'un assemblage de deux pièces de coulissement coulissant l'une par rapport à l'autre. Le déplacement en translation du contrôleur 102 est contrôlé par un dispositif électromagnétique 190 (ou moteur électrique linéaire) visible en partie sur la figure 12 (le sabot 161 le cachant presque entièrement), de même que le support 180 du PCB 126 du capteur magnétique.

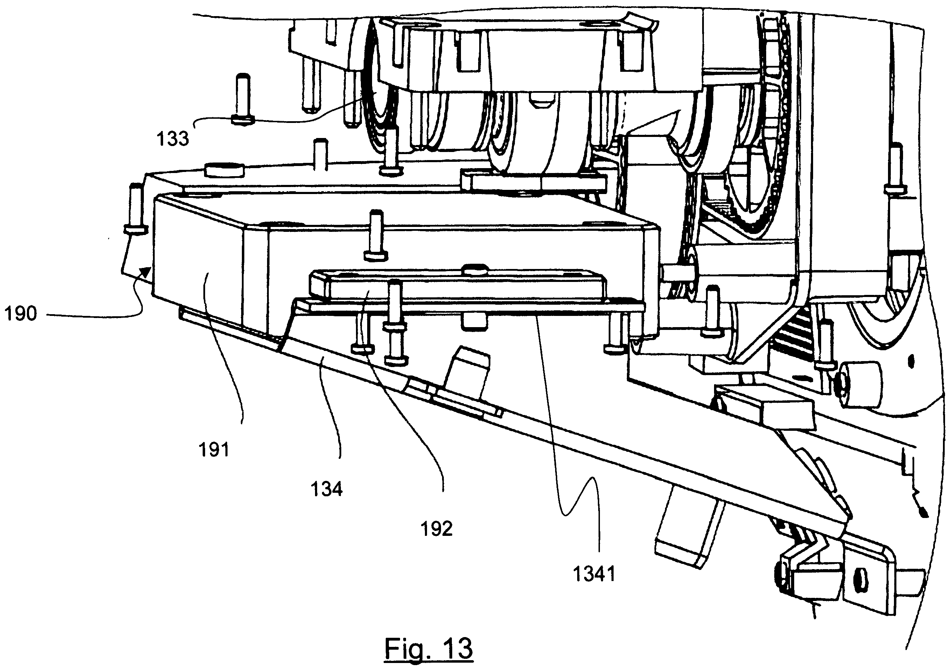

Plus précisément, comme illustré figure 13, le dispositif électromagnétique 190 commande le déplacement en translation d'un corps de guidage 191 mobile par rapport au support fixe 103 et sur lequel sont solidarisés la colonne de direction 133 et l'actionneur 102. Ce corps de guidage 191 coulisse par rapport à un plateau de guidage 192 qui est solidaire de la partie fixe 103.

Le corps de guidage 191 se présente sous la forme d'un socle de forme sensiblement parallélépipédique comprenant une fente (ou logement) accessible par deux ouvertures rectangulaires situées sur deux faces opposées du socle.

Le plateau de guidage 192 se présente sous la forme d'un plateau porte-aimant qui porte au moins un aimant (non représenté) et comprend une partie ou portion pénétrante 51 destinée à être logée dans le logement du corps de guidage 191, comme illustré sur la figure 13. Ce plateau porte-aimant 192 est en outre solidarisé (ici par vissage) aux pattes 1341 de la platine 134 et aux deux sabots droit 161 et gauche 160. Le socle du corps de guidage 191 comprend au moins un bobinage (non représenté) qui, en fonction du signal électrique le parcourant, provoque le déplacement du socle par rapport au plateau porte-aimant 192. On comprend aisément que le sens, la course (ou plage) et/ou la vitesse de déplacement du socle du corps de guidage 191, et donc de la colonne de direction 133, sont fonction du signal électrique parcourant le ou les bobinages. La course maximale dépend des dimensions du moteur linéaire utilisé. Il est possible d'utiliser un moteur linéaire dont le corps de guidage 191 est plus long pour obtenir une amplitude de déplacement relatif plus grande du corps de guidage 191 par rapport au plateau porte-aimant 192 et donc une course maximale plus longue de la colonne de direction 133.

On notera que dans ce deuxième mode préférentiel de réalisation, la colonne de direction 133 n'est pas horizontale mais inclinée par rapport à l'horizontale pour permettre de faire ressentir à l'utilisateur des effets de retour de force selon quatre directions (haut, bas, avant, arrière) grâce à seulement un dispositif électromagnétique, un corps de guidage 191 et un plateau de guidage 192.

Dans une variante du mode de réalisation décrit ci-dessus, le corps de guidage 191 peut être solidaire de la partie fixe 103 et le plateau de guidage 192 peut être solidaire de l'actionneur 102.

Dans un autre mode de réalisation, la colonne de direction 133 peut être sensiblement horizontale.

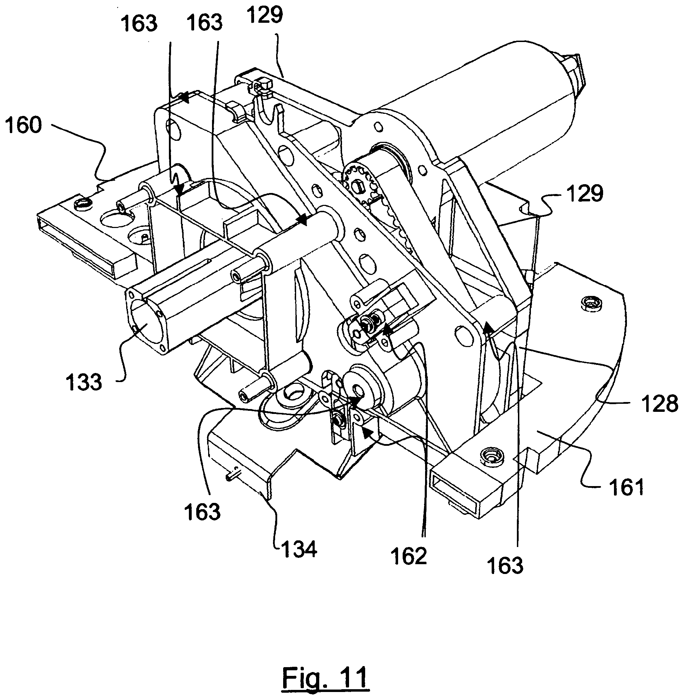

Sur la figure 11, on distingue l'intérieur du contrôleur 101 une fois le volant 102, la coque supérieure 103a, la coque inférieure 103b et la face avant 103c retirées (ainsi que les palettes 125 de changement de vitesse, le cache 174, le soufflet 175, le manchon 172 avec son connecteur 123, et l'écrou 173). Les demi-coques inférieure 128 et supérieure 129 sont fixées l'une à l'autre, par exemple, par des vis.

Pour permettre la translation de la colonne de direction 133 (et en même temps des demi-coques 128, 129 et du système d'effet de couple et de vibration(s), mettant en œuvre le moteur électrique 141 rotatif notamment), un moteur électrique linéaire (non-représenté sur la figure 11, mais visible sur la figure 13 (référencé 190)) comportant deux éléments, l'un étant mobile en translation par rapport à l'autre en fonction d'un signal électrique, est mis en oeuvre. L'un des éléments du moteur électrique linéaire est fixée à la platine 134 et aux deux sabots droit 161 et gauche 160 (qui sont fixes par rapport à la partie fixe 103) et l'autre élément est fixé la demi-coque inférieure 128, par exemple par des vis.

Par ailleurs, une platine 163 est fixée aux demi-coques 128, 129, par exemple par des vis, cette platine 163 étant mobile en translation mais non en rotation. Elle comporte deux tendeurs à galet 162 qui agissent sur la courroie crantée 143.

Le contrôleur 101 comporte un système de fixation qui permet de fixer et de verrouiller de façon réversible l'actionneur 102 au support fixe 103 de façon à permettre la transmission du mouvement de rotation de l'actionneur 102 vers la colonne de direction qui, dans ce mode de réalisation, est l'arbre 133.

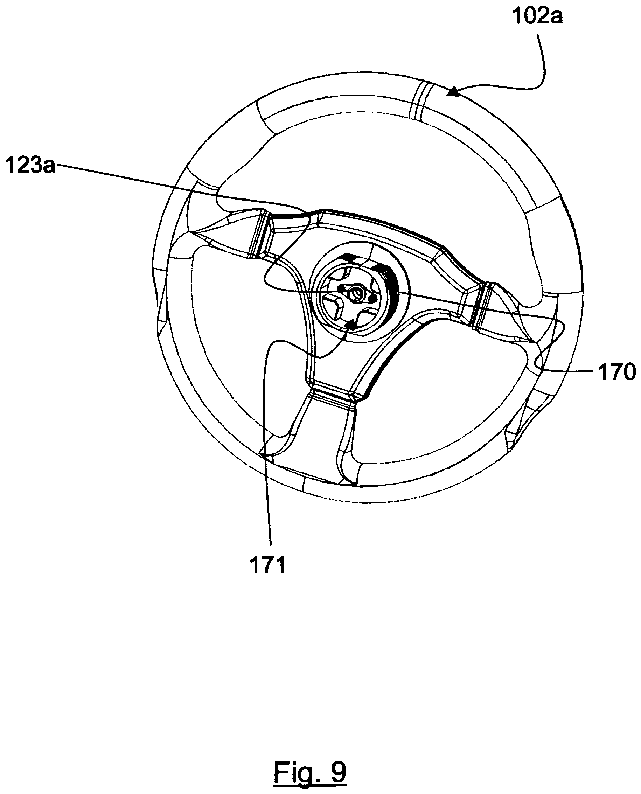

La figure 9 illustre le volant 102a lorsqu'il est détaché de la partie fixe 103. Le volant 102a comprend un embout fileté 170 qui comporte une cavité-réceptacle 171, sous la forme d'une extrémité femelle, dans laquelle est logé un connecteur 123a, pour l'alimentation en énergie électrique et/ou la transmission de données. Ces données correspondent par exemple à des informations sur la rotation de l'actionneur 102, et le cas échéant des informations complémentaires, tels qu'une commande de changement de vitesse, lorsque l'utilisateur agit sur les palettes 125 (visibles sur la figure 10C), ou encore d'autres commandes déclenchées par l'activation de boutons 126 (visibles sur la figure 7) situés sur l'actionneur 102, ou le cas échéant à des états à afficher par des voyants, ou enfin à des informations sur des vibrations (ou des signaux électriques correspondants aux vibrations) qui doivent être exécutées par des petits systèmes de vibrations intégrés dans la roue du volant 102a (un tel système de vibrations comprend un petit moteur électrique rotatif et une masse dissymétrique fixée à l'arbre de ce petit moteur, de sorte que le centre de gravité de cette masse soit éloigné de l'axe de rotation du petit moteur électrique rotatif et que cela provoque un balourd et donc des vibrations dans la roue du volant 102a).

L'autre partie 102b de l'actionneur 102 solidaire de la face avant 103c de la partie fixe 103 est illustrée sur la figure 10C. Elle comprend un manchon 172 sous la forme d'une extrémité mâle qui est fixée à l'arbre 133 de l'actionneur 102. Un écrou ou bague mobile 173 dont l'alésage intérieur est fileté est placé sur le manchon 172. L'écrou 173 est mobile en rotation et en translation tant qu'il n'est pas vissé, un épaulement du manchon 172 formant toutefois une butée en translation qui empêche l'écrou 173 de se désolidariser complètement du manchon 172.

Pour solidariser le volant 102a illustré sur la figure 9 à la partie 102b de l'actionneur 102 illustrée sur la figure 10C, il est nécessaire de pousser le volant 102a contre le manchon 172 de la colonne de direction ou arbre 133 de l'actionneur 102 et de placer l'extrémité mâle du manchon 172 dans l'extrémité femelle de la cavité-réceptacle 171 de l'embout 170 du volant 102a. Il est ensuite nécessaire de tourner l'écrou 173 pour le visser sur le pas de vis de l'embout fileté 170 du volant 102a. Le volant 102a est dès lors solidaire en rotation et en translation du manchon 172 et donc de la colonne de direction 133.

Bien entendu, il est possible de remplacer ce système de fixation du volant 102a par le système de fixation décrit dans le premier mode de réalisation préférentiel de sorte que la partie fixe 103 utilise le système de fixation qui permet de fixer et de verrouiller de façon réversible l'actionneur 2 sur une pièce de liaison 31. L'actionneur 2 pourra alors être fixé de façon réversible sur une telle partie fixe. Dans ce cas (si le volant 102a comporte des éléments électriques), le connecteur 123 est remplacé par un connecteur 23 (ou par un boîtier de piles et le cas échéant un dispositif de transmission sans-fil si des signaux doivent être envoyés ou reçus par le volant 102a).

Sur la figure 10C sont également représentés un soufflet 175 et un cache 174, destinés à empêcher, ou à tout le moins limiter, la présence de poussières et l'encrassement dans la partie fixe 103 du contrôleur 101.

L'autre partie 102b de l'actionneur 102 comprend également un connecteur 123b, les signaux électriques étant transmis via ces connecteurs 123a, 123b de façon bi-directionnelle.

Les dimensions et les formes de l'embout 170 de l'actionneur 102, du manchon 172 et de l'écrou 173 sont choisies de façon que les connecteurs ne subissent pas d'efforts importants et, par conséquent ,ne se dégradent pas.

De nombreux autres moyens de fixation réversibles peuvent bien sûr être mis en œuvre, sans sortir du champ de l'invention, y compris un simple emboîtement à force du volant 102a sur la colonne de direction 133, dans un mode de réalisation simplifié.

Selon un mode de réalisation particulier de l'invention, le capteur magnétique 124 fournit en temps réel les données qui permettent à un microprocesseur de contrôler en temps réel le déplacement en rotation (et le cas échéant le déplacement en translation), en déterminant en temps réel le ou les déplacements réels (la course réelle et l'angle réel peuvent être mesurés directement mais il est également possible de déterminer le sens, l'accélération et la vitesse réels du déplacement).

Ce mode de réalisation particulier permet de tenir compte des conséquences provoquées par les efforts exercés par l'utilisateur sur l'actionneur 102 (et donc sur la colonne de direction 133 et sur l'arbre du moteur électrique rotatif 141 qui en est solidaire) et d'ajuster si nécessaire le signal électrique. Il permet un contrôle du déplacement en rotation (et, le cas échéant, du déplacement en translation). Dans ce mode de réalisation particulier, le déplacement est donc asservi.

Dans le deuxième mode de réalisation illustré notamment sur les figures 7 et 9, la partie 102a de l'actionneur comporte des boutons 126 et un connecteur 123a. Selon une variante de l'invention, l'actionneur 102a peut ne comporter aucun élément contrôlant ou acheminant des courants électriques (notamment aucun bouton et aucun connecteur). En effet, les actions qui correspondent aux boutons peuvent être effectuées via un ou plusieurs dispositifs de la partie fixe 103, plus précisément grâce à un ou plusieurs dispositifs de commande. Ces dispositifs de commande peuvent, par exemple, se présenter sous une forme ressemblant à celle d'un comodo d'essui glace et/ou à un comodo de clignotant. Par ailleurs, il convient de noter que la présence de systèmes de vibrations intégrés dans la roue du volant 102a n'est pas indispensable car le système d'effet de couple est apte à produire également des vibrations et ce de façon plus réaliste. Par conséquent, selon cette variante, seule la partie fixe 103 comporte alors des éléments contrôlant ou acheminant des courants électriques (tous les éléments "électriques" du contrôleur de jeu sont alors regroupés dans la partie fixe 103), à l'inverse du premier mode de réalisation préférentiel de l'invention selon lequel l'actionneur 2 regroupe tous les éléments "électriques").

Du fait de l'absence de nécessité de contact permanent entre l'actionneur 2, 102 et la partie fixe 3, 103, l'actionneur peut être aisément changé pour un autre type d'actionneur. Ceci peut se faire en cohérence avec le logiciel et plus précisément selon le véhicule simulé par ce logiciel, et permet d'adapter l'ergonomie et le ressenti des différents actionneurs.

Par exemple, l'utilisateur peut facilement changer un actionneur du type volant pour mettre en place un actionneur de type guidon si le jeu vidéo auquel il joue simule une moto, à la place d'un volant préalablement monté. Il est également possible de prévoir une déclinaison de volant, selon le type de véhicule simulé. Pour les voitures, les déclinaisons de volant peuvent notamment être : formule 1, grand tourisme, rallye, tout-terrain, kart, etc. Pour les trains, les déclinaisons peuvent être : Micheline, T.G.V., ... Pour les motocyclettes, les déclinaisons de guidon peuvent être : moto non préparée, moto de course, moto de cross, moto de rallye, scooter, etc. Pour les vélos, les déclinaisons de guidon peuvent être : vélo de course, V.T.C., V.T.T., vélo de ville, etc. Pour les bateaux, les déclinaisons de roue peuvent être : barre à roue en bois de Galions, barre à roue de voilier moderne, volant, etc. Les actionneurs peuvent donc avoir des formes différentes, des diamètres différents, des boutons différents de sorte que leur ergonomie soit adaptée au type de véhicule simulé. Ils peuvent également comporter, des moteurs de vibrations différents, ils peuvent être filaires ou sans fil (pour la transmission de données), etc.

Il est aussi possible de prévoir, dans un mode de réalisation particulier, que le nombre de tours que l'actionneur peut faire par rapport à la partie fixe diffère suivant le type d'actionneur utilisé ou selon le type de partie fixe utilisée ou encore suivant le niveau de gamme du contrôleur de jeu. Ainsi, on peut prévoir des capteurs magnétiques ou des aimants différents, selon les actionneurs, de façon à obtenir des effets restitués différents, une résolution différente (des mesures de déplacement plus ou moins précises), et/ou une résistance plus ou moins grande aux perturbations magnétiques ou aux variations de température, etc.

Sur les figures, le contrôleur de jeu est représenté sans dispositif assurant la liaison avec le sol ou la fixation réversible ou non avec un support tel qu'une table ou un plan de travail ou un cockpit. De tels dispositifs existent. Par exemple, le contrôleur de jeu peut être fourni avec un dispositif selon le document de brevet US6378826 et dans ce cas, avec une partie fixe réalisée selon le premier mode de réalisation préférentiel, la partie fixe et le dispositif ne comportent aucun élément fonctionnant grâce à des courants électriques ou à des champs électromagnétiques et aucun élément contrôlant ou acheminant des courants électriques. De préférence, ce dispositif est séparable de la partie fixe.

Selon un autre mode de réalisation de l'invention, on combine le premier mode de réalisation avec le deuxième mode de réalisation décrits ci-dessus. En particulier, la partie fixe 3 peut être modifiée de sorte que cette partie fixe comporte le premier système d'effet de couple et de vibration(s) et le deuxième système, dit système de retour de force, décrits dans le deuxième mode de réalisation préférentiel. Un premier ensemble de détection à effet Hall ou à effet magnétorésistif peut être utilisé pour mesurer le déplacement en rotation de l'axe du moteur électrique rotatif 141 du système d'effet de couple et de vibration(s). A cet effet, un capteur magnétique 124 monté sur un PCB 126 peut alors être placé à proximité du porte-aimant 127a sensiblement dans le prolongement de l'axe du moteur électrique rotatif 141 pour mesurer le déplacement en rotation de l'aimant 127b. Il est également possible de mesurer le déplacement en translation de la colonne de direction :
- soit par un second capteur (placé sur un PCB vissé à un support fixé au sabot ou à la coque supérieure 103a) mesurant le déplacement en translation de l'aimant 127b (c'est-à-dire le déplacement en translation de l'axe du moteur électrique rotatif 141 du système d'effet de couple et de vibration(s) qui est solidaire en translation de la colonne de direction 133) ;
- soit par un second ensemble de détection à effet Hall ou à effet magnétorésistif mesurant le déplacement en translation de la colonne de direction (ou d'une autre pièce solidaire en translation de la colonne de direction).

Dans un tel mode de réalisation, un capteur magnétique embarqué dans l'actionneur 2 (destiné à coopérer avec un aimant 37 de la partie fixe qui est placé à proximité du système de fixation) n'est plus indispensable car les informations relatives à la mesure du déplacement de la colonne de direction en rotation sont alors redondantes avec les informations du premier ensemble de détection à effet Hall ou à effet magnétorésistif. Toutefois, le capteur magnétique embarqué dans l'actionneur permet de détecter la présence et le type de partie fixe avec laquelle coopère l'actionneur 2 (si la partie fixe intègre le premier ensemble de détection, alors pour éviter la redondance et économiser de l'énergie, il est possible de désactiver automatiquement l'ensemble de détection embarqué dans l'actionneur jusqu'à la réinitialisation ou la remise en marche du contrôleur de jeu, et de désactiver l'ensemble des circuits embarqués si la partie fixe comporte toutes les commandes nécessaires et si l'utilisateur n'a pas appuyé sur un bouton d'activation de l'actionneur pendant un délai prédéterminé). En outre, la présence du capteur magnétique embarqué dans l'actionneur rend l'actionneur 2 pleinement compatible avec les différents types de partie fixe (celles qui comportent un premier ensemble de détection à effet Hall ou à effet magnétorésistif et celles qui n'en comportent pas).

## Revendications

1. Contrôleur de jeu présentant un actionneur (2, 102) mobile en rotation par rapport à une partie fixe (3, 103), de façon à simuler un contrôle de la rotation d'une colonne de direction d'un véhicule simulé, ledit contrôleur de jeu mettant en œuvre des moyens de détection de l'angle du déplacement en rotation dudit actionneur (2, 102) comprenant au moins un ensemble de détection à effet Hall ou à effet magnétorésistif,
**caractérisé en ce que** ledit au moins un ensemble de détection à effet Hall ou à effet magnétorésistif est constitué d'au moins deux éléments, dont un aimant permanent (37, 127b) et un capteur magnétique multiaxial (24, 124) mesurant les caractéristiques du champ magnétique dudit aimant (37, 127b),
et **en ce que**, au moins lors de la rotation dudit actionneur (2, 102), un premier desdits éléments est solidaire en rotation dudit actionneur (2, 102) et un second desdits éléments est solidaire en rotation de ladite partie fixe (3, 103),
et **en ce que** ledit contrôleur de jeu met en œuvre un système de retour de force et/ou de retour en position neutre de l'actionneur (2, 102), ledit aimant (37, 127b) étant sensiblement aligné avec l'axe de rotation d'un arbre (33, 141) dudit système de retour de force et/ou de retour en position neutre par le biais duquel ledit système agit sur l'actionneur (2, 102).

2. Contrôleur de jeu selon la revendication 1, **caractérisé en ce que** deux au moins desdits éléments sont sensiblement alignés selon l'axe de rotation dudit arbre (33,141) dudit système de retour de force et/ou de retour en position neutre.

3. Contrôleur de jeu selon l'une quelconque des revendications 1 et 2, **caractérisé en ce que** ledit aimant est solidaire de ladite partie fixe (3).

4. Contrôleur de jeu selon la revendication 3, **caractérisé en ce que** ledit aimant est solidaire de ladite partie fixe (3) par l'intermédiaire d'un premier arbre (36) fixe par rapport à ladite partie fixe (3) s'étendant selon l'axe de rotation dudit actionneur (2) et portant cet aimant.

5. Contrôleur de jeu selon la revendication 4, **caractérisé en ce que** ledit premier arbre (36) est une tige porte-aimant cylindrique et **en ce que** ledit aimant est un aimant couronne (37) monté à l'extrémité de ladite tige.

6. Contrôleur de jeu selon l'une quelconque des revendications 4 et 5, **caractérisé en ce qu'**un second arbre mobile en rotation par rapport à ladite partie fixe (3) selon l'axe de rotation dudit actionneur (2), assure le guidage dudit aimant par rapport audit capteur magnétique (24), **en ce que** ledit premier arbre (36) fixe et/ou ledit aimant sont conformés de façon que ledit aimant soit placé à moins de 9 mm dudit capteur magnétique (24), et **en ce qu'**une portion de l'actionneur (2) formant carter assure la protection dudit capteur magnétique (24).

7. Contrôleur de jeu selon la revendication 2, **caractérisé en ce que** ledit système de retour de force et/ou de retour en position neutre de l'actionneur (2, 102) comprend un moteur rotatif et, **en ce que** deux au moins desdits éléments sont sensiblement alignés selon l'axe de rotation dudit moteur rotatif.

8. Contrôleur de jeu selon la revendication 7, **caractérisé en ce que** ledit aimant (127b) est solidaire d'un arbre dudit moteur rotatif, ledit capteur magnétique (124) étant situé à proximité dudit aimant (127b) sensiblement dans le prolongement de l'arbre dudit moteur rotatif.

9. Contrôleur de jeu selon la revendication 8, **caractérisé en ce que** ledit moteur rotatif est un moteur électrique (141) rotatif.

10. Contrôleur de jeu selon la revendication 9, **caractérisé en ce que** ledit moteur électrique (141) rotatif agit sur l'actionneur (2, 102) par l'intermédiaire de moyens de transmission appartenant au groupe comprenant les engrenages, les poulies, les roues dentées, les courroies et les chaînes.

11. Contrôleur de jeu selon l'une quelconque des revendications 2 ou 7, **caractérisé en ce que** ledit actionneur (2, 102) est détachable de ladite partie fixe (3, 103).

12. Contrôleur de jeu selon la revendication 11, **caractérisé en ce que** ledit actionneur (2, 102) comprend un logement formant partie femelle, prévu pour s'emboîter sur une partie mâle correspondante sur ladite partie fixe (3, 103).

13. Contrôleur de jeu selon l'une quelconque des revendications 11 et 12, **caractérisé en ce qu'**il comprend des moyens de verrouillage dudit actionneur (2, 102) sur ladite partie fixe (3, 103).

14. Contrôleur de jeu selon l'une quelconque des revendications 11 à 13, **caractérisé en ce que** ledit actionneur (2, 102) comporte un connecteur (23, 123) sur lequel peut venir se connecter un câble.

15. Contrôleur de jeu selon l'une quelconque des revendications 1 à 14, **caractérisé en ce que** ledit actionneur (2, 102) appartient au groupe comprenant :
- les volants ;
- les guidons ;
- les barres à roue de bateau.

16. Contrôleur de jeu selon l'une quelconque des revendications 11 à 15, **caractérisé en ce qu'**il comprend ou est compatible avec au moins deux actionneurs (2, 102) interchangeables.

17. Contrôleur de jeu selon la revendication 16, **caractérisé en ce que** lesdits actionneurs (2, 102) interchangeables présentent des formes différentes et/ou des commandes différentes.

18. Contrôleur de jeu selon l'une quelconque des revendications 1 à 17 **caractérisé en ce que** ladite partie fixe (3) ou ledit actionneur (102) ne contient aucun élément mettant en œuvre des courants électriques ou des champs électromagnétiques.

19. Contrôleur de jeu selon l'une quelconque des revendications 1 à 18, **caractérisé en ce qu'**il est constitué de plusieurs modules assemblés par l'utilisateur, lesdits modules étant eux-mêmes constitués d'éléments fournis pré-assemblés à l'utilisateur, dont au moins un desdits modules ne contient aucun élément mettant en œuvre des courants électriques ou des champs électromagnétiques ni aucun élément qui contrôle ou achemine des courants électriques.

20. Contrôleur de jeu selon l'une quelconque des revendications 1 à 8, **caractérisé en ce qu'**une portion de l'actionneur (2) formant carter assure la protection du capteur magnétique (24).

21. Actionneur (2, 102) mobile en rotation par rapport à une partie fixe (3), de façon à simuler un contrôle de la rotation d'une colonne de direction, destiné à un contrôleur de jeu selon l'une quelconque des revendications 1 à 20.

22. Partie fixe (3, 103) destinée à former, avec un actionneur (2) mobile en rotation par rapport à ladite partie fixe, un contrôleur de jeu selon l'une quelconque des revendications 1 à 20.

## Patentansprüche

1. Gaming-Controller, umfassend einen Aktuator (2, 102), der in Bezug auf ein festes Teil (3, 103) drehbeweglich ist, um eine Steuerung der Drehung einer Lenksäule eines simulierten Fahrzeugs zu simulieren, wobei der Gaming-Controller Mittel zur Erfassung des Drehwinkels des Aktuators (2, 102) einsetzt, umfassend mindestens eine Erfassungseinheit mit Hall-Effekt oder Magnetwiderstandseffekt,
**dadurch gekennzeichnet, dass** die mindestens eine Erfassungseinheit mit Hall-Effekt oder Magnetwiderstandseffekt von mindestens zwei Elementen gebildet ist, einem Dauermagneten (37, 127b) und einem multiaxialen Magnetsensor (24, 124), die die Merkmale des Magnetfeldes des Magneten (37, 127b) messen,
und dass zumindest bei der Drehung des Aktuators (2, 102) ein erstes der Elemente drehfest mit dem Aktuator (2, 102) verbunden ist, und ein zweites der Elemente drehfest mit dem festen Teil (3, 103) verbunden ist,
und dass der Gaming-Controller ein Force-Feedback-System und/oder ein System zur Rückstellung des Aktuators (2, 102) in Neutralposition einsetzt, wobei der Magnet (37, 127b) im Wesentlichen auf die Drehachse einer Welle (33, 141) des Force-Feedback-Systems und/oder Systems zur Rückstellung in Neutralposition ausgerichtet ist, über die das System auf den Aktuator (2, 102) einwirkt.

2. Gaming-Controller nach Anspruch 1, **dadurch gekennzeichnet, dass** mindestens zwei der Elemente im Wesentlichen entlang der Drehachse der Welle (33, 141) des Force-Feedback-Systems und/oder des Systems zur Rückstellung in Neutralposition ausgerichtet sind.

3. Gaming-Controller nach einem der Ansprüche 1 und 2, **dadurch gekennzeichnet, dass** der Magnet mit dem festen Teil (3) verbunden ist.

4. Gaming-Controller nach Anspruch 3, **dadurch gekennzeichnet, dass** der Magnet mit dem festen Teil (3) über eine erste in Bezug zum festen Teil (3) feste Welle (36) verbunden ist, die sich entlang der Drehachse des Aktuators (2) erstreckt und diesen Magneten trägt.

5. Gaming-Controller nach Anspruch 4, **dadurch gekennzeichnet, dass** die erste Welle (36) eine zylindrische Magnetträgerstange ist, und dass der Magnet ein Kronenmagnet (37) ist, der am Ende der Stange montiert ist.

6. Gaming-Controller nach einem der Ansprüche 4 und 5, **dadurch gekennzeichnet, dass** eine zweite Welle, die in Bezug zu dem festen Teil (3) um die Drehachse des Aktuators (2) drehbeweglich ist, die Führung des Magneten in Bezug zum Magnetsensor (24) gewährleistet, dass die erste feste Welle (36) und/oder der Magnet derart ausgebildet sind, dass der Magnet in mindestens 9 mm Abstand zum Magnetsensor (24) angeordnet ist, und dass ein Abschnitt des Aktuators (2), der ein Gehäuse bildet, den Schutz des Magnetsensors (24) gewährleistet.

7. Gaming-Controller nach Anspruch 2, **dadurch gekennzeichnet, dass** das Force-Feedback-System und/oder System zur Rückstellung in Neutralposition des Aktuators (2, 102) einen Rotationsmotor umfasst, und dass mindestens zwei der Elemente im Wesentlichen entlang der Drehachse des Rotationsmotors ausgerichtet sind.

8. Gaming-Controller nach Anspruch 7, **dadurch gekennzeichnet, dass** der Magnet (127b) an einer Welle des Rotationsmotors befestigt ist, wobei der Magnetsensor (124) in der Nähe des Magneten (127b) im Wesentlichen in der Verlängerung der Welle des Rotationsmotors angeordnet ist.

9. Gaming-Controller nach Anspruch 8, **dadurch gekennzeichnet, dass** der Rotationsmotor ein elektrischer Rotationsmotor (141) ist.

10. Gaming-Controller nach Anspruch 9, **dadurch gekennzeichnet, dass** der elektrische Rotationsmotor (141) auf den Aktuator (2, 102) mit Hilfe von Übertragungsmitteln aus der Gruppe umfassend Getriebe, Rollen, Zahnräder, Riemen und Ketten einwirkt.

11. Gaming-Controller nach einem der Ansprüche 2 oder 7, **dadurch gekennzeichnet, dass** der Aktuator (2, 102) von dem festen Teil (3, 103) lösbar ist.

12. Gaming-Controller nach Anspruch 11, **dadurch gekennzeichnet, dass** der Aktuator (2, 102) eine Aufnahme umfasst, die ein aufnehmendes Teil umfasst, das dazu vorgesehen ist, auf einem entsprechenden Einsteckteil auf dem festen Teil (3, 103) einzurasten.

13. Gaming-Controller nach einem der Ansprüche 11 und 12, **dadurch gekennzeichnet, dass** er Mittel zur Verriegelung des Aktuators (2, 102) auf dem festen Teil (3, 103) umfasst.

14. Gaming-Controller nach einem der Ansprüche 11 bis 13, **dadurch gekennzeichnet, dass** der Aktuator (2, 102) einen Stecker (23, 123) umfasst, an den ein Kabel angeschlossen werden kann.

15. Gaming-Controller nach einem der Ansprüche 1 bis 14, **dadurch gekennzeichnet, dass** der Aktuator (2, 102) der Gruppe umfassend:
- die Lenkräder;
- die Lenkstangen;
- die Schiffssteuerräder
angehört.

16. Gaming-Controller nach einem der Ansprüche 11 bis 15, **dadurch gekennzeichnet, dass** er mindestens zwei austauschbare Aktuatoren (2, 102) umfasst oder mit diesen kompatibel ist.

17. Gaming-Controller nach Anspruch 16, **dadurch gekennzeichnet, dass** die austauschbaren Aktuatoren (2, 102) unterschiedliche Formen und/oder unterschiedliche Steuerungen aufweisen.

18. Gaming-Controller nach einem der Ansprüche 1 bis 17, **dadurch gekennzeichnet, dass** das feste Teil (3) oder der Aktuator (102) keinerlei Elemente umfasst, die elektrische Ströme oder elektromagnetische Felder einsetzen.

19. Gaming-Controller nach einem der Ansprüche 1 bis 18, **dadurch gekennzeichnet, dass** er aus mehreren vom Benutzer zusammengebauten Modulen gebildet ist, wobei die Module selbst aus mehreren für den Benutzer vormontierten Elementen gebildet sind, wobei mindestens eines der Module keinerlei Elemente enthält, die elektrische Ströme oder elektromagnetische Felder einsetzen, und auch keinerlei Elemente, die elektrische Ströme steuern oder weiterleiten.

20. Gaming-Controller nach einem der Ansprüche 1 bis 8, **dadurch gekennzeichnet, dass** ein Abschnitt des Aktuators (2), der ein Gehäuse bildet, den Schutz des Magnetsensors (24) gewährleistet.

21. Aktuator (2, 102), der in Bezug zu einem festen Teil (3) drehbeweglich ist, um eine Steuerung der Drehung einer Lenksäule zu simulieren, der für einen Gaming-Controller nach einem der Ansprüche 1 bis 20 bestimmt ist.

22. Festes Teil (3, 103), das dazu bestimmt ist, mit einem Aktuator (2), der in Bezug zu dem festen Teil drehbeweglich ist, einen Gaming-Controller nach einem der Ansprüche 1 bis 20 zu bilden.

## Claims

1. Game controller having an actuator (2, 102) rotationally movable relative to a fixed part (3, 103), so as to simulate a control of the rotation of a steering column of a simulated vehicle, the said game controller implementing means for detecting the angle of the rotational movement of the said actuator (2, 102) comprising at least one Hall effect or magnetoresistive effect detection unit,
**characterised in that** the said at least one Hall effect or magnetoresistive effect detection unit consists of at least two elements, including a permanent magnet (37, 127b) and a multiaxial magnetic sensor (24, 124) measuring the characteristics of the magnetic field of the said magnet (37, 127b),
and **in that**, at least during the rotation of the said actuator (2, 102), a first of the said elements is rotationally integral with the said actuator (2, 102) and a second of the said elements is rotationally integral with the said fixed part (3, 103),
and **in that** the said game controller implements a force return and/or return to neutral position system of the actuator (2, 102), the said magnet (37, 127b) being substantially aligned with the axis of rotation of a shaft (33, 141) of the said force feedback system and/or of return to neutral position through which the said system acts on the actuator (2, 102).

2. Game controller according to claim 1, **characterised in that** at least two of the said elements are substantially aligned along the axis of rotation of the said shaft (33, 141) of the said force feedback system and/or return to neutral position.

3. Game controller according to either one of claims 1 and 2, **characterised in that** the said magnet is integral with the said fixed part (3).

4. Game controller according to claim 3, **characterised in that** the said magnet is integral with the said fixed part (3) by means of a first shaft (36) fixed relative to the said fixed part (3) extending along the axis of rotation of the said actuator (2) and carrying this magnet.

5. Game controller according to claim 4, **characterised in that** the said first shaft (36) is a cylindrical magnet-carrying rod and **in that** the said magnet is a crown magnet (37) mounted at the end of the said rod.

6. Game controller according to any one of claims 4 and 5, **characterised in that** a second shaft rotationally movable relative to the said fixed part (3) along the axis of rotation of the said actuator (2), guides the said magnet relative to the said magnetic sensor (24), **in that** the said first fixed shaft (36) and/or the said magnet are shaped so that the said magnet is located less than 9 mm from the said magnetic sensor (24), and **in that** a portion of the actuator (2) forming a casing protects the said magnetic sensor (24).

7. Game controller according to claim 2, **characterised in that** the said force feedback system and/or return to neutral position of the actuator (2, 102) comprises a rotary motor, and **in that** at least two of the said elements are substantially aligned along the axis of rotation of the said rotary motor.

8. Game controller according to claim 7, **characterised in that** the said magnet (127b) is integral with a shaft of the said rotary motor, the said magnetic sensor (124) being located near the said magnet (127b) substantially in the extension of the shaft of the said rotary motor.

9. Game controller according to claim 8, **characterised in that** the said rotary motor is a rotary electric motor (141).

10. Game controller according to claim 9, **characterised in that** the said rotary electric motor (141) acts on the actuator (2, 102) by means of transmission belonging to the group comprising gears, pulleys, gearwheels, belts and chains.

11. Game controller according to either one of claims 2 or 7, **characterised in that** the said actuator (2, 102) is detachable from the said fixed part (3, 103).

12. Game controller according to claim 11, **characterised in that** the said actuator (2, 102) comprises a housing forming a female part designed to fit onto a corresponding male part on the said fixed part (3, 103).

13. Game controller according to either one of claims 11 and 12, **characterised in that** it comprises means for locking the said actuator (2, 102) on the said fixed part (3, 103).

14. Game controller according to any one of claims 11 to 13, **characterised in that** the said actuator (2, 102) comprises a connector (23, 123) to which a cable can be connected.

15. Game controller according to any one of claims 1 to 14, **characterised in that** the said actuator (2, 102) belongs to the group comprising:
- steering wheels;
- handlebars;
- boat steering wheels.

16. Game controller according to any one of claims 11 to 15, **characterised in that** it comprises or is compatible with at least two interchangeable actuators (2, 102).

17. Game controller according to claim 16, **characterised in that** the said interchangeable actuators (2, 102) have different shapes and/or different controls.

18. Game controller according to any one of claims 1 to 17, **characterised in that** the said fixed part (3) or the said actuator (102) does not contain any element using electric currents or electromagnetic fields.

19. Game controller according to any one of claims 1 to 18, **characterised in that** it consists of multiple modules assembled by the user, the said modules themselves consisting of elements supplied pre-assembled to the user, of which at least one of the said modules contains no element employing electric currents or electromagnetic fields nor any element which controls or routes electric currents.

20. Game controller according to any one of claims 1 to 8, **characterised in that** a portion of the actuator (2) forming the casing protects the magnetic sensor (24).

21. Actuator (2, 102) rotationally movable relative to a fixed part (3), so as to simulate a control of the rotation of a steering column, intended for a game controller according to any one of claims 1 to 20.

22. Fixed part (3, 103) intended to form, with an actuator (2) rotationally movable relative to the said fixed part, a game controller according to any one of claims 1 to 20.
